# EUROPÄISCHE PATENTSCHRIFT

(11) **EP 4 229 398 B1**
(45) Veröffentlichungstag und Bekanntmachung des Hinweises auf die Patenterteilung: **16.04.2025**
(21) Anmeldenummer: 21797967.3
(22) Anmeldetag: 15.10.2021
(51) Int. Cl.: G01N 21/64, G02B 21/00, G02B 27/58

(54) **VERFAHREN UND VORRICHTUNG ZUR LICHTMIKROSKOPISCHEN MULTISKALENAUFNAHME BIOLOGISCHER PROBEN**
METHOD AND DEVICE FOR MULTISCALE CAPTURE OF BIOLOGICAL SAMPLES BY LIGHT MICROSCOPY
PROCÉDÉ ET DISPOSITIF POUR L'ENREGISTREMENT MULTI-ÉCHELLES D'ÉCHANTILLONS BIOLOGIQUES PAR MICROSCOPIE OPTIQUE

(30) Priorität: 16.10.2020 DE 102020127385
(43) Veröffentlichungstag der Anmeldung: 23.08.2023
(73) Patentinhaber: Abberior Instruments GmbH, 37077 Göttingen (DE)
(72) Erfinder: DONNERT, Gerald, 37077 Göttingen (DE); HARKE, Benjamin, 37083 Göttingen (DE); WILLEMER, Winfried, 37120 Bovenden (DE)
(86) Internationale Anmeldenummer: PCT/EP2021/078654
(87) Internationale Veröffentlichungsnummer: WO 2022/079265

(56) Entgegenhaltungen:
- DE-B3- 102018 126 232
- GWOSCH KLAUS C ET AL: "MINFLUX nanoscopy delivers 3D multicolor nanometer resolution in cells", NATURE METHODS, NATURE PUBLISHING GROUP US, NEW YORK, vol. 17, no. 2, 13 January 2020 (2020-01-13), pages 217 - 224, XP037006746, ISSN: 1548-7091, [retrieved on 20200113], DOI: 10.1038/S41592-019-0688-0
- PAPE JASMIN K. ET AL: "Multicolor 3D MINFLUX nanoscopy of mitochondrial MICOS proteins", PROCEEDINGS OF THE NATIONAL ACADEMY OF SCIENCES, vol. 117, no. 34, 11 August 2020 (2020-08-11), pages 20607 - 20614, XP055867920, ISSN: 0027-8424, DOI: 10.1073/pnas.2009364117
- BALZAROTTI FRANCISCO ET AL: "Nanometer resolution imaging and tracking of fluorescent molecules with minimal photon fluxes", SCIENCE, vol. 355, no. 6325, 22 December 2016 (2016-12-22), US, pages 606 - 612, XP055869146, ISSN: 0036-8075, DOI: 10.1126/science.aak9913
- CHAPMAN DANA V ET AL: "Optical super-resolution microscopy in polymer science", PROGRESS IN POLYMER SCIENCE, PERGAMON PRESS, OXFORD, GB, vol. 111, 14 October 2020 (2020-10-14), XP086366794, ISSN: 0079-6700, [retrieved on 20201014], DOI: 10.1016/J.PROGPOLYMSCI.2020.101312
- JONKMAN JAMES ET AL: "Tutorial: guidance for quantitative confocal microscopy", NATURE PROTOCOLS, NATURE PUBLISHING GROUP, GB, vol. 15, no. 5, 31 March 2020 (2020-03-31), pages 1585 - 1611, XP037111848, ISSN: 1754-2189, [retrieved on 20200331], DOI: 10.1038/S41596-020-0313-9
- MISHIN A S ET AL: "Live-Cell Super-resolution Fluorescence Microscopy", BIOCHEMISTRY (MOSCOW), PLEIADES PUBLISHING, MOSCOW, vol. 84, no. 1, 19 April 2019 (2019-04-19), pages 19 - 31, XP036761717, ISSN: 0006-2979, [retrieved on 20190419], DOI: 10.1134/S0006297919140025

## Beschreibung

### TECHNISCHES GEBIET DER ERFINDUNG

Die Erfindung bezieht sich auf Verfahren der lichtoptischen Mikroskopie, insbesondere auf Verfahren der überaufgelösten, nicht beugungsbegrenzten optischen Fluoreszenzmikroskopie an biologischen Proben. Sie bezieht sich außerdem auf Kombinationsverfahren, bei denen nicht beugungsbegrenzte optische Fluoreszenzmikroskopieverfahren einen Bestandteil bilden. Weiter bezieht sie sich auch auf Verfahrenskombinationen mit Verfahrenskomponenten, die zwar lichtoptisch, aber nicht fluoreszenzmikroskopisch sind, sowie auf solche mit Verfahrenskomponenten, die nicht lichtoptisch sind. Weiter bezieht sich die Erfindung auf entsprechende Vorrichtungen.

### STAND DER TECHNIK

Aus der deutschen Patentschrift DE 10 2018 126 232 B3 ist ein Scanning-Mikroskop bekannt, das mehrere Lichtquellen aufweist. Die Lichtquellen können schmalbandige Laser oder auch Weißlichtlaser sein. Die Lichtquellen werden jeweils einzeln oder gemeinsam jeweils mittels eines dichroitischen Spiegels in einen gemeinsamen Beleuchtungsstrahlengang eingekoppelt. Die Einkopplung erfolgt in einem Abschnitt, der in umgekehrter Richtung von Detektionslicht durchstrahlt wird. Die Menge der verschiedenen Lichtquellen kann für verschiedene Zwecke vorgesehen sein; die einzelnen Lichtquellen der Menge können beispielsweise Anregungslicht für die konfokal-mikroskopische Aufnahme, für Aufnahmen mittels MINFLUX-Nanoskopie oder für Aufnahmen mittels STED-Mikroskopie verschiedener Farbstoffe abgeben. Eine Lichtquelle kann auch als Lichtquelle für Fluoreszenzverhinderungslicht, insbesondere STED-Licht dienen. In diesem Fall müsse das Mikroskop außerdem eine Strahlformungseinrichtung aufweisen, die die Wellenfront des Beleuchtungslichts so einstellt, dass sich am Fokuspunkt des Objektivs eine von Intensitätsmaxima umgebene Intensitätsnullstelle des Fluoreszenzverhinderungslicht ausbildet. Eine entsprechende Strahlformungseinrichtung müsse auch bei der MINFLUX-Nanoskopie vorhanden sein. Das Patent richtet sich auf eine Wechselvorrichtung, mittels der ein einer Lichtquelle zugeordneter dichroitischer Spiegel gegen eine planparallele Platte, die dem Strahlengang denselben Parallelversatz aufprägt wie der dichroitische Spiegel, ausgetauscht wird, wenn die betreffende Lichtquelle nicht für die Beleuchtung benötigt wird. Hierdurch wird einerseits erreicht, dass auch aus der Probe emittiertes Licht der Wellenlänge der nicht benötigten Lichtquelle detektiert werden kann, und andererseits, dass die Justage der Strahlengänge zueinander erhalten bleibt. Das Scanning-Mikroskop weist ferner ein Objektiv, durch das das Beleuchtungslicht auf eine Probe fokussiert wird, und einen Scanner, der die Lichtintensitätsverteilung des Beleuchtungslichts gegenüber der Probe verlagert und das Detektionslicht entscannt, auf. Weiter weist es im Detektionsstrahlengang ein einstellbares wellenlängenselektives Bandpassfilter, welches aus einem einstellbaren Kurzpassfilter und einem einstellbaren Langpassfilter aufgebaut ist, auf. Das Licht, welches das Filter passiert, wird durch einen Detektionslichtausgang einem Detektor zugeführt, während das reflektierte Licht einem weiteren Ausgang zugeführt wird. Das reflektierte Licht kann anschließend einem weiteren einstellbaren wellenlängenselektiven Bandpassfilter zugeführt werden, das heißt, die Filter können kaskadiert werden. Mit Hilfe des Filters könne das Spektrum des Detektionslichts analysiert werden, indem das Filter fortlaufend durchgestimmt werde.

Aus der deutschen Offenlegungsschrift DE 10 2010 015 915 A1 ist ein Verfahren zur Ermittlung von Anregungsspektren und Emissionsspektren von Fluoreszenzfarbstoffen in einer Probe bekannt, welches mittels eines Mikroskops ausgeführt wird. Das Mikroskop ist mit einer Mehrzahl von Detektoren ausgestattet, wobei die Detektoren wechselseitig Licht unterschiedlicher Wellenlängenbänder detektieren. Alle Wellenlängenbänder können spektral verschoben werden, wobei aber auch nach der Verschiebung gilt, dass die Detektoren wechselseitig Licht unterschiedlicher Wellenlängenbänder detektieren. Weiter weist das Mikroskop einen Laser auf, dessen Emissionswellenlänge spektral verschoben werden kann. Für die Ermittlung des Anregungsspektrums erfolgt eine erste Anregung der Probe mit einer ersten Wellenlänge und die Fluoreszenz wird mit der Mehrzahl der Detektoren, die sich hinsichtlich der spektralen Detektionsbänder in einer ersten Einstellung befinden, gemessen, anschließend erfolgt eine Verschiebung der Anregungswellenlänge, wieder wird die resultierende Fluoreszenz mit der Mehrzahl der Detektoren in der ersten Einstellung gemessen; dies wird ggf. mehrfach wiederholt; in der konkret gezeigten Ausführungsform erfolgt die Anregung nacheinander mit insgesamt fünf Anregungswellenlängen und die Detektion mit fünf Detektoren. Diese Abfolge bildet einen ersten Durchlauf von Anregungsschritten. In diesem Durchlauf werden (fünf) erste Stützstellen des Anregungsspektrums erhalten, indem zu jeder Anregungswellenlänge die Summe der einzelnen Detektorsignale bestimmt wird. Gleichzeitig wird zu jeder der (fünf) Anregungswellenlängen ein Emissionsspektrum mit mehreren (fünf) Stützstellen erhalten; laut Offenlegungsschrift würden Informationen erhalten, die zum Ermitteln des Emissionsspektrums genutzt werden könnten. Gemäß einer grafischen Darstellung der Beziehung der Anregungswellenlängen und der Detektionsbänder beginnt im ersten Durchlauf das Detektionsband eines ersten Detektors knapp oberhalb der ersten Anregungswellenlänge, das des zweiten Detektors beginnt knapp oberhalb der zweiten Anregungswellenlänge und so fort. Anschließend wird entsprechend ein zweiter Durchlauf durchgeführt, wobei einerseits die Detektionswellenlängenbänder aller Detektoren um einen Betrag verschoben werden und anderseits die Anregungswellenlängen um denselben Betrag verschoben werden. Das Wellenlängenband des längstwelligen Detektors wird dabei gemäß der grafischen Darstellung schmaler, da zwar die untere Grenzwellenlänge des Detektionsbereichs, nicht aber die obere geändert wird. In diesem zweiten Durchlauf werden (fünf) weitere Stützstellen des Anregungsspektrums erhalten. Es können nun entsprechende weitere Durchläufe mit weiter verschobenen Anregungswellenlängen und Detektionswellenlängenbändern erfolgen. Die Verschiebung erfolgt genau so lange, bis bei einer weiteren Verschiebung die erste Anregungswellenlänge des folgenden Durchlaufs der zweiten Anregungswellenlänge des ersten Durchlaufs entsprechen würde. Dies bedeutet, jede einzelne Anregungswellenlänge wird mit genau einer Einstellung der spektralen Wellenlängenbänder der Detektoren genutzt. Die Durchläufe können und sollen bevorzugt während des scannenden Abbildens der Probe erfolgen. Bevorzugt erfolge das Abscannen der Probe und das Erfassen der Probe gerade so, dass gerade mit dem vollständigen Erfassen der Spektren auch ein vollständiges Bild der Probe vorliege. In der Schrift wird weiter angegeben, dass zu jeder der Anregungswellenlängen aus den Signalen der einzelnen Detektoren ein Emissionsspektrum erhalten werde, im genannten Ausführungsbeispiel eines mit fünf Stützstellen. Die Zahl der Stützstellen könne vergrößert werden, indem die Zahl der Einzeldetektoren erhöht werde. Weiter wird behauptet, dass Farbstoffe mit identischen Emissionsspektren anhand unterschiedlicher Anregungsspektren unterschieden werden könnten, dies ermögliche es, in einer mehrfach gefärbten Probe die Farbstoffe individuell abzubilden. Eine nähere Betrachtung zeigt allerdings, dass das konkret als einziges Ausführungsbeispiel angegebene Verfahren mangelhaft ist und dass die Aussagen zur Anwendung auf mehrfach gefärbte Proben nicht zutreffen. Denn durch das Verschieben der unteren Grenzwellenlänge des Detektionsbereichs mit der Verschiebung der Anregungswellenlängen von Durchlauf zu Durchlauf ändert sich von Durchlauf zu Durchlauf der erfasste Wellenlängenbereich, er wird kleiner, sodass die im zweiten Durchlauf erhaltenen Werte gegenüber den im ersten Durchlauf erhaltenen Werten systematisch und fälschlich verhältnismäßig zu klein sein werden. Liegen in der Probe mehrere Farbstoffe vor, so ist, unabhängig von dem oberhalb beschriebenen Problem, die Bestimmung des Anregungsspektrums eines einzelnen der Farbstoffe schlicht unmöglich. Denn bei der Anregung werden jeweils mehrere Farbstoffe angeregt und dementsprechend detektieren die Detektoren immer ein Summensignal. Eine Zerlegung des Summensignals in seine einzelnen Summanden ist aber nur dann möglich, wenn die Anregungsspektren der einzelnen Farbstoffe bekannt sind. Wäre dies der Fall, dann könnten die Verhältnisse, in dem die Farbstoffe im Anregungsbereich vorliegen, bestimmt werden. Tatsächlich soll aber ja nach dem Verfahren erst das Anregungsspektrum bestimmt werden.

Mikroskope, insbesondere konfokale Laserscanning-Mikroskope mit Detektionseinheiten, deren spektraler Empfindlichkeitsbereich einstellbar sind, sind im Stand der Technik vielfach genannt. Als ein Beispiel sei hier die deutsche Offenlegungsschrift DE 10 2006 034 908 A1 genannt. Die Einstellung der Detektionswellenlängen erfolgt regelmäßig in Abhängigkeit von den in der jeweiligen Probe vorhandenen Fluorophoren. Die Einstellbarkeit der Filter dient dann dazu, dass vor Beginn der Bildaufnahme an einer Probe nur eine Einstellung von Komponenten, aber kein Austausch stattfinden muss.

Ein noch junges Mikroskopieverfahren ist die MINFLUX-Nanoskopie. Bei der MINFLUX-Nanoskopie handelt es sich um Verfahren der Lokalisationsmikroskopie. Die Lokalisation der Fluorophore erfolgt mittels strukturierter Anregungslichtverteilungen. Eine grundlegende Besonderheit der MINFLUX-Nanoskopie ist, dass die Anregung der Fluorophore jeweils so erfolgt, dass ein zu lokalisierendes Fluorophor immer nah an einem oder in einem Minimum der Anregungslichtverteilung, welches idealerweise eine Nullstelle ist, platziert ist, wobei die Anregungslichtverteilung benachbart zum Minimum einen Intensitätsanstiegsbereich aufweist. Hierdurch wird eine bessere Ausnutzung der Fluoreszenzphotonen hinsichtlich der Gewinnung von Information über die Lage des jeweiligen emittierenden Fluorophors erreicht. Dies gilt auch für Anwendungen, in denen die Bewegung von Fluorophoren über die Zeit verfolgt werden soll. Die Beobachtung einer Probe unter Nutzung eines Anregungsminimums, der Grundlage der MINFLUX-Nanoskopie, ist bekannt aus den Patenten DE 10 2011 055 367 B4, hier zunächst nur zur Verfolgung der Bewegung einzelner Moleküle in einer Probe, und DE 10 2013 114 860 B3. In DE 10 2011 055 367 B4 wird auch die Möglichkeit angesprochen, zwei verschiedene Fluorophore gleichzeitig zu verfolgen. Hierfür sollen zwei verschiedene Lichtquellen verwendet werden, zwischen denen im schnellen Wechsel umgeschaltet wird.

Auf Basis dieser Grundlage sind eine Reihe von Verfeinerungen zur Informationsgewinnung entstanden, die eine Lokalisation der Fluorophore mit einer Unsicherheit im Bereich unterhalb von 2 nm ermöglichen. Diese Größe der Unsicherheit entspricht der Ausdehnung von Fluorophoren. Eine ausführliche Darstellung zur MINFLUX-Nanoskopie findet sich in "Nanometer resolution imaging and tracking of fluorescent molecules with minimal photon fluxes", Francisco Balzarotti et. al., arXiv:1611.03401 [physics.optics] (2016). Grundsätzlich muss, um ein Fluorophor mittels MINFLUX-Nanoskopie lokalisieren zu können, das Intensitätsminimum bzw. die Intensitätsnullstelle an einer Mehrzahl von Positionen relativ zur Lage des Fluorophors platziert werden. Hierfür muss in einem vorbereitenden Schritt eine Position des Fluorophors mit einer ersten, geringeren Genauigkeit abgeschätzt werden. Dies kann beispielsweise mittels gewöhnlicher Lokalisationsmikroskopie (PALM, STORM) geschehen oder mittels anderer bekannter Verfahren. In der genannten Publikation wird hierfür ein Verfahren beschrieben, bei dem eine Probe mit einer Gauß'schen Intensitätsverteilung abgetastet wird, bis an einer Abtastposition Fluoreszenz detektiert wird, die mit gewisser Wahrscheinlichkeit von einem vereinzelten Molekül stammt. Die Abtastung wird dann gestoppt und die Intensitätsverteilung wird anschließend an mehreren Orten, konkret an vier Orten, im Abstand von weniger als der Wellenlänge des Lichts zur Abtastposition um diese herum positioniert. Aus den zu den einzelnen Positionen gemessenen Photonenzahlen wird die Position des vereinzelten Emitters nach einem in der Publikation beschriebenen Verfahren abgeschätzt. Die Abschätzung entspricht im Kern einer ratiometrischen Auswertung der Photonenzahlen. Anschließend wird eine Intensitätsverteilung von Anregungslicht mit einem zentralen Minimum, beispielsweis in der Form eines Donuts, wie aus der STED-Mikroskopie bekannt, an einer bekannten Position platziert, die derart gewählt ist, dass das Fluorophor nah am Minimum der Intensitätsverteilung liegt. Die Fluoreszenzantwort des Fluorophors wird gemessen. Dasselbe wird für eine oder mehrere weitere Positionen der Intensitätsverteilung wiederholt. Mittels einer ratiometrischen Auswertung der Intensitätsverhältnisse wird die Position des Fluorophors mit höherer Genauigkeit bestimmt. Grundsätzlich steigt die Emissionsrate, je weiter das Fluorophor vom Anregungsminimum entfernt ist bzw. je weiter das Fluorophor in einen Intensitätsanstiegsbereich hinein verschoben ist. Diese genauer bestimmte Position kann nun als Ausgangsposition für eine Wiederholung der Abfolge der vorgenannten Schritte verwendet werden, wobei die Mehrzahl von Positionen dichter an die abgeschätzte Fluorophorposition gelegt werden können. Insbesondere mit Blick auf die Verfolgung der Bewegung von Fluorohoren kann auch die Veränderung der Emissionsrate bei einer Verlagerung des Fluorophors in den Intensitätsanstiegsbereich hinein oder zum Minimum hin genutzt werden, um die Verlagerung des Fluorophors hochgenau abzuschätzen. Je näher die Minimumspositionen der Intensitätsverteilung jeweils am tatsächlichen Ort des Fluorophors liegen, umso weniger Fluoreszenzphotonen werden für eine Lokalisation mit einer vorgegebenen Unsicherheit bzw. Genauigkeit benötigt. Das MINFLUX-Verfahren kann beispielweise unter Nutzung sogenannter Bottle-Beams zur Anregung auch zur Lokalisation in drei Dimensionen angewendet werden.

Als Patentoffenlegungsschriften zur MINFLUX-Nanoskopie sind insbesondere die Schriften WO 2018/069 283 A1, US 2019/0235220 A1, US 2019/0234882 A1 und US 2019/0234879 A1 zu nennen, wobei die genannten US-Patentanmeldungen alle Folgeanmeldungen zu der zuerst genannten vorläufigen internationalen Patentanmeldung sind, in der alle in der Folge mit Bezug zu den US-Offenlegungsschriften genannten Konzepte ebenfalls offenbart sind. In allen Schriften wird genannt, dass zur Durchführung des MINFLUX-Verfahrens ein STED-Mikroskop verwendet werden könne, wobei das Licht, welches bei Anwendung als STED-Mikroskop Fluoreszenzverhinderungslicht ist, als Anregungslicht benutzt wird.

Die US 2019/0235220 A1 richtet sich auf ein Verfahren mit einer geringen oder minimalen Anzahl von Positionen, an denen ein Intensitätsminimum, welches in jeder Raumrichtung, in der eine Lage des Fluorophors bestimmt werden soll, beiderseits von Intensitätsanstiegsbereichen benachbart ist, platziert wird, um die Lage des Fluorophors zu bestimmen.

Die US 2019/0234882 A1 richtet sich auf das weiter oberhalb beschriebene Verfahren, bei dem die aus einem ersten MINFLUX-Schritt gewonnene Ortsinformation genutzt wird, um in einem Folgeschritt das Minimum der Intensitätslichtverteilung jeweils näher an dem Fluorophor zu platzieren und hieraus genauere Ortsinformation abzuleiten.

Die US 2019/0234879 A1 richtet sich auf ein Verfahren, bei dem das Intensitätsminimum sehr schnell, quasi gleichzeitig, an einer Mehrzahl von Positionen um die abgeschätzte Lage des Fluorophors herum platziert wird. Eine einzelne Position wird dann näher an das vermutete Minimum herangeschoben, wenn an ihr eine erhöhte Emissionsrate festgestellt wird.

Die Veröffentlichung "MINFLUX nanoscopy delivers 3D multicolor nanometer resolution in cells", Klaus C. Gwosch et. al., Nat Methods 17, 217-224 (2020), https://doi.org/10.1038/s41592-019-0688-0, richtet sich auf dreidimensionale Nanoskopie mit mehreren verschiedenen Fluorophoren. In der Publikation wird auch der Nachweis dokumentiert, dass mittels des iterativen Annäherns der Minimumspositionen an den tatsächlichen Ort des betreffenden Fluorophors eine Verringerung der Unsicherheit der Lokalisation gegenüber einer ratiometrischen Lokalisation mit festen Minimumspositionen erreicht wird. Weiter wird gezeigt, dass auf diese Weise eine isotrope Auflösung in drei Dimensionen erreicht wird. Für Bildgebung unter Verwendung verschiedener Fluorophore werden jeweils Farbstoffe verwendet, die wechselseitig einen großen Überlapp der spektralen Absorptionskurven aufweisen und somit mit ein und derselben Anregungswellenlänge angeregt werden können. Konkret dargestellt wird dreidimensionale Nanoskopie mit jeweils zwei verschiedenen Fluorophoren, wobei insgesamt zwei verschiedene Paare (A: CF660C und Alexa Fluor 647; B: CF680C und Alexa Fluor 647), wobei bei beiden Paaren ein Partner des Paars der Farbstoff Alexa Fluor 647 ist, verwendet werden. Im Rahmen der MINFLUX-Aufnahme wird für die Anregung beider Farbstoffe eines Paars jeweils derselbe Laser genutzt. Die jeweils zwei Farbstoffe des Paars unterscheiden sich in ihrer Emissionscharakteristik. Der Detektionspfad der verwendeten Nanoskopie-Anordnung wird mittels eines dichroitischen Strahlteilers in einen spektralen Detektionskanal für Licht einer Wellenlänge oberhalb von 685 nm und einen für Licht einer Wellenlänge unterhalb von 685 nm aufgeteilt. Bei Durchführung der Messung wird, da die spektrale Emission aller verwendeten Fluorophore sowohl oberhalb als auch unterhalb der Grenzwellenlänge deutlich ungleich 0 (null) ist, für alle verwendeten Fluorophore Licht in beiden Spektralkanälen detektiert. Das Summensignal wird für die Lokalisation des Fluorophors verwendet. Da regelmäßig im Lokalisationsbereich nur ein Fluorophor, abgesehen von Hintergrundfluoreszenz, fluoresziert und da die verschiedenen Fluorophore eines Paars sich in der spektralen Emission unterscheiden, kann jeweils aus dem Verhältnis der Signale in den verschiedenen Detektionskanälen erschlossen werden, welche Fluorophorsorte des Farbstoffpaars das Signal verursacht hat. Im Ergebnis kann daher jeder Lokalisation ein konkreter Farbstoff zugeordnet werden. Hierbei mögliche Fehlzuordnungen werden im Rahmen einer Datenanalyse mittels einer Hauptkomponentenanalyse der spektralen Anteile aller MINFLUX-Iterationen minimiert. Da die Lokalisation auf der Kenntnis über die Positionen der Minima der Intensitätsverteilungen alleine des Anregungslichts basiert, gibt es keinen farbabhängigen Versatz zwischen Lokalisationen der verschiedenen Fluorophore, da diese mit identischen Anregungswellenlängen angeregt werden. Der experimentelle Aufbau weist zwei verschiedene Laser für die Anregung mit einem Anregungsdonut auf, einen mit einer Wellenlänge von 642 nm und einen mit einer Wellenlänge von 560 nm. Es wird nachgewiesen, dass MINFLUX-Nanoskopie auch mit Nutzung photoaktivierbarer fluoreszenter Proteine, konkret von mMaple, insbesondere auch an lebenden Zellen durchgeführt werden kann; der Anregungslaser mit einer Wellenlänge von 560 nm wird offensichtlich für die Anregung des fluoreszenten Proteins mMaple bei der entsprechenden Einfarben-MINFLUX-Aufnahme benötigt.

Ein weitgehend identisches Verfahren wie in der oberhalb genannten Publikation wird zur Untersuchung anderer Proben in der Veröffentlichung "Multicolor 3D MINFLUX nanoscopy of mitochondrial MICOS proteins", Jasmin Pape et al., PNAS,117 (34) 20607-20614, (2020), https://doi.orq/10.1073/pnas.2009364117, behandelt. Um dicht gepackte Strukturen abbilden zu können, wird ein besonderer Algorithmus für die Bildung von Lokalisationsclustern beziehungsweise die Zuordnung von Lokalisationen zu einzelnen Fluorophoren verwendet. Um Bereiche, die mit MINFLUX untersucht werden sollen, auszuwählen, wird zunächst ein Weitfeldbild aufgenommen. Hierfür wird eine Kamera und ein separater Laser genutzt.

Mittels MINFLUX-Nanoskopie konnte die Position von Fluorophoren in zwei Raumrichtungen experimentell mit einer Unsicherheit von nur 1 nm bestimmt werden, das heißt die Genauigkeit der Lagebestimmung ist vergleichbar mit der Ausdehnung der Fluorophore selbst. Soll die Lage eines einzelnen Fluorophors mit einer gegebenen Messunsicherheit bestimmt werden, so wird hierfür eine geringere Zeit und insbesondere eine geringere Anzahl von Fluoreszenzphotonen benötigt als bei einer Lagebestimmung eines einzelnen Fluorophors mittels herkömmlicher Lokalisationsmikroskopie.

In der europäischen Offenlegungsschrift EP 3 372 990 A1 wird neben weiteren MINFLUX-Verfahren ein dem MINFLUX-Verfahren in einem Aspekt ähnliches Verfahren beschrieben. Wie bei einem MINFLUX-Verfahren wird ein vereinzeltes Molekül fokussiert mit einer Intensitätsverteilung beaufschlagt, die ein zentrales Minimum, bevorzugt eine Nullstelle, und dieses umgebende Anstiegsbereiche aufweist; ebenfalls wie bei MINFLUX wird dieses Minimum an eine Mehrzahl von Abtastpunkten um den vermuteten Ort des vereinzelten Moleküls platziert und es wird für jeden Abtastpunkt eine Fluoreszenzemission detektiert; aus den so erhaltenen Intensitätswerten oder Photonenzahlen wird die tatsächliche Position hochgenau abgeschätzt. Im Unterschied zu MINFLUX ist die Intensitätsverteilung eine Verteilung von Fluoreszenzverhinderungslicht, insbesondere von STED-Licht. Diese wird gemeinsam mit Anregungslicht angewendet, wobei die Intensitätsverteilung des Anregungslichts kein zentrales lokales Minimum aufweist. Während bei MINFLUX die Fluoreszenzemission dann höher ist, wenn das vereinzelte Moleküle weiter vom zentralen Minimum der Intensitätsverteilung entfernt ist, ist es bei diesem Verfahren umgekehrt.

Die Veröffentlichung "Super-resolution microscopy demystified", Lothar Schermelleh et. al., Nature Cell Biology, VOL 21, 72-84 (2019), https://doi.org/10.1038/s41556-018-0251-8, liefert einen aktuellen Überblick über Verfahren der Superauflösungsmikroskopie, wobei die Autoren hierzu auch solche Verfahren rechnen, die keine Ortsfrequenzinhalte oberhalb der maximalen Ortsfrequenz der konfokalen Mikroskopie übertragen, sondern lediglich eine verbesserte Übertragung hoher Ortsfrequenzen innerhalb des durch die Beugungsbegrenzung gegeben Frequenzspektrums aufweisen. Zu diesen Verfahren gehören zum Beispiel die Structured Illumination Microscopy (SIM) und die Image Scanning Microscopy. Die Autoren stellen darin fest, dass keines der bekannten Superauflösungsverfahren für alle Abbildungszwecke geeignet sei und dass daher für die Bearbeitung bestimmter Fragestellungen komplementäre Verfahren zur Anwendung kommen sollten. Die Superauflösungsmikroskopie böte Wissenschaftlern die Chance, biologische Modellvorstellungen zu überprüfen und zu verfeinern; eine deskriptive Forschung bekomme daher neben der von Hypothesen getriebenen Forschung zunehmende Bedeutung, wenn (patho)-biologische Vorgängen verstanden werden sollen. In dieser Veröffentlichung werden auch korrelative Verfahren genannt, bei denen Bilder verschiedener Abbildungsverfahren, zum Beispiel ein lichtoptisch aufgenommenes, superaufgelöstes Bild mit einem elektronenmikroskopischen Bild, in Beziehung gesetzt werden.

Ein weiterer Überblick über aktuelle Verfahren der Superauflösungsmikroskopie und der Nanoskopie inklusive kombinierte Verfahren wie beispielsweise eine Kombination der STED-Mikroskopie mit der Rasterkraftmikroskopie ist zu finden in dem Review-Artikel "Optical nanoscopy", A. Diaspro und P. Bianchini, Riv. Nuovo Cim. (2020). https://doi.org/10.1007/s40766-020-00008-1.

In der Publikation "High-resolution deep view microscopy of cells and tissues", H. Schneckenburger et al., Quantum Electron. 50 2 (2020), https://doi.org/10.1070/QEL17204, werden verschiedene Verfahren und Vorrichtungen zur Abbildung dicker biologischer Proben vorgeschlagen. Es wird festgestellt, dass regelmäßig eine hohe Auflösung nur bei Verwendung von Objektiven mit hoher numerischer Apertur erzielt werde. Diese besitzen nur einen geringen Arbeitsabstand, sodass eine hochaufgelöste Abbildung dickerer Proben mit diesen nicht möglich sei. In der Publikation wird nun vorgeschlagen, eine Probe mittels einer Mehrzahl verteilter Aperturen zu beleuchten. Hierdurch könne eine Art Fokuspunkt in beliebigen Tiefen einer Probe erzeugt werden. Das aus dem Fokusbereich stammende Licht könne nun detektiert werden, es könnten hochaufgelöste Bilder erzeugt werden. Dies gelinge sowohl mit einer STED-artigen als auch mit einer MINFLUX-artigen Beleuchtung.

Zum Beispiel aus der Publikation "Lensfree on-chip microscopy based on dual-plane phase retrieval", Cheng Guo et al., Opt. Express 27, 35216-35229 (2019), https://doi.org/10.1364/ OE.27.035216, ist ein Verfahren bekannt, bei dem durch eine Probe transmittiertes und von dieser beeinflusstes Laserlicht direkt ohne Verwendung optisch abbildender Elemente auf einem ortsauflösenden Detektor aufgefangen wird. Aus dem Signal kann eine Abbildung der Probe berechnet werden. Mit dem Verfahren wird eine Bildauflösung von etwa 1 µm erreicht. Das Verfahren ist grundsätzlich nicht geeignet, fluoreszente Proben abzubilden.

Aus der Patentoffenlegungsschrift DE 10 2006 047 816 A1 sind ein Verfahren und eine Vorrichtung zum hochaufgelösten optischen Abtasten einer mit mehreren Farbstoffen gefärbten Probe bekannt. Bei dem Verfahren wird die Probe mittels eines STED-Verfahrens abgebildet. Eine Abbildung der mehreren Farbstoffe könne gemäß der Offenlegungsschrift sequenziell unter anderem in der Art erfolgen, dass zunächst eine STED-Aufnahme des einen Farbstoffs durch vollständiges Abtasten eines zu untersuchenden Probenbereichs erfolge und dass bei einem anschließenden vollständigen Abtasten ein anderer Farbstoff abgebildet werde. In einer Ausführungsform könne für die Anregung zweier Farbstoffe eine gemeinsame Wellenlänge gewählt werden. Die Fluoreszenz der beiden Farbstoffe kann durch ein wellenlängensensitives Element (Filter) getrennt werden und die Fluoreszenz der beiden Farbstoffe kann mit jeweils einem Detektor registriert werden. Die beschriebene Vorrichtung kann eine Detektionseinrichtung mit mehreren Detektoren aufweisen, die einzeln und/oder gruppenweise abschaltbar sind. Die als Rastermikroskop ausgeführte Vorrichtung kann an den Einsatz für Farbstoffe mit einer bestimmten spektralen Charakteristik angepasst sein. Ein ähnliches Verfahren zum hochaufgelösten optischen Abtasten einer mit mindestens zwei Farbstoffen gefärbten Probe wie in der vorgenannten Schrift wird in der DE 10 2006 011 556 A1 beschrieben. Dieses Verfahren zeichnet sich dadurch aus, dass sich die Anregungsspektren und Abregungswellenlängen der beiden Substanz voneinander unterscheiden.

### AUFGABE DER ERFINDUNG

Der Erfindung liegt die Aufgabe zugrunde, verbesserte Verfahren für die mikroskopische oder nanoskopische Abbildung einer mit mehreren Farbstoffen gefärbten Probe anzugeben. Insbesondere sollen die Verfahren ermöglichen, eine nanoskopische Abbildung mit bis zu molekularer Auflösung in den räumlichen Kontext mikroskopischer Abbildungen zu setzen oder ein nanoskopisches Verfolgen einzelner Moleküle im räumlichen Kontext einer mikroskopischen Abbildung durchzuführen. Dies soll auch an lebenden biologischen Objekten ermöglicht werden.

### LÖSUNG

Die Aufgabe der Erfindung wird durch Verfahren mit den Merkmalen des unabhängigen Patentanspruchs 1 sowie durch ein Mikroskop mit den Merkmalen des Anspruchs 15 gelöst. Die abhängigen Ansprüche 2 bis 14 betreffen bevorzugte Ausführungsformen des Verfahrens nach Anspruch 1. Die vorliegende Erfindung ist in den Ansprüchen 1 und 15 definiert.

### BESCHREIBUNG DER ERFINDUNG

### Zur Problemstellung

Unter Mikroskopie werden Verfahren verstanden, die es erlauben, Objekte mit hoher Auflösung abzubilden. Hohe Auflösung bedeutet dabei zunächst einmal nur, dass Details eines abgebildeten Objekts aufgelöst werden sollen, die bei Betrachtung mit dem bloßen Auge nicht aufgelöst werden können. Erfolgt keine Betrachtung mit dem Auge, sondern erfolgt eine Aufnahme von Daten, aus denen eine bildliche Darstellung zur Betrachtung erzeugt werden kann, verliert die Vergrößerung der Abbildung durch die optischen Komponenten des Mikroskops ihre Bedeutung hinsichtlich der Bilderzeugung, von Bedeutung sind alleine die optische Auflösung und der Abstand der Datenpunkte in der Probe zueinander. Neben der Auflösung des Mikroskops ist für seine Anwendbarkeit für die Untersuchung eines bestimmten Objekts oder, anders ausgedrückt, für eine bestimmte Untersuchungsaufgabe die Größe des Bildfelds oder allgemeiner des abbildbaren Volumens entscheidend. Sollen Objekte wie zum Beispiel lebende Zellen oder in lebenden Zellen untersucht werden, die sich in der Zeit verändern, gewinnt die Zeitdauer, die für eine Aufnahme benötigt wird, eine entscheidende Bedeutung. Die Anforderungen an ein Mikroskop hängen also in vielfältiger Weise von der Untersuchungsaufgabe ab. Dementsprechend gibt es eine Vielzahl unterschiedlicher Mikroskope und Mikroskopieverfahren.

Für eine Vielzahl von Mikroskopieverfahren ist die Auflösung beugungsbegrenzt. Im Gebiet der Fluoreszenzmikroskopie wird zur quantitativen Beschreibung der Beugungsbegrenzung zumeist das Rayleighkriterium angegeben, im Zusammenhang mit der Beobachtung von Streulicht wird häufig das Abbe'sche Beugungslimit genannt. Die Auflösungsgrenze hängt zwar von Details der Beobachtungsbedingungen ab, sie ist aber immer proportional zur Wellenlänge des genutzten Lichts und liegt in praktisch relevanten Anwendungsfällen bei etwa der Hälfte der Wellenlänge des verwendeten Lichts. Die Beschreibung der Auflösung eines Mikroskops kann auch durch die Angabe der optischen Transferfunktion (OTF) oder der Modulationstransferfunktion (MTF), die sich als Absolutbetrag der OTF ergibt, beschrieben werden. Die MTF besitzt eine Grenzfrequenz, ab der sie konstant den Wert 0 aufweist. Für Fluoreszenzmikroskopie mit Weitfeldbeleuchtung ist diese Grenzfrequenz *fₙ* = 2 NA/λ, wobei NA die numerische Apertur der Abbildungsoptik und λ die Wellenlänge des Fluoreszenzlichts ist; im Falle einer strukturierten Beleuchtung, zu der grundsätzlich auch eine konfokale Beleuchtung gehört, ist die Grenzfrequenz doppelt so groß, sie beträgt also *fₙ* = 4 NA/λ. Letzteres gilt unter der Annahme, dass die Anregungs- und die Emissionswellenlänge sich nicht signifikant unterscheiden. Diese Grenzfrequenz ist für beugungsbegrenzte Verfahren absolut und kann weder durch spezielle Beleuchtungsstrukturen, spezielle Abbildungsmodalitäten oder Entfaltungsverfahren überschritten werden, außer eine Entfaltung stützt sich auf anderweitig gewonnenes Vorwissen. Im Falle der einfachen konfokalen Fluoreszenzmikroskopie ist zu beachten, dass diese Grenzfrequenz nur bei einer infinitesimal kleinen Lochblende erreicht werden würde, das heißt, in der Praxis nicht erreicht werden kann. In der praktischen Anwendung wird vielfach eine Lochblende genutzt, deren Durchmesser dem Durchmesser des Beugungsscheibchens der Aperturblende bis zur ersten Nullstelle entspricht. Dann entspricht die Grenzfrequenz der MTF bei der konfokalen Fluoreszenzmikroskopie genau der bei der Weitfeldfluoreszenzmikroskopie. Diese Aussagen beziehen sich auf die laterale Auflösung. Hinsichtlich der axialen Auflösungen gilt Ähnliches, wobei die Auflösung in axialer Richtung regelmäßig schlechter ist, das heißt, der Mindestabstand trennbarer Details ist größer, die Grenzfrequenz der Modulationstransferfunktion ist niedriger.

Diese Auflösungsgrenze kann mittels verschiedener bekannter super-auflösender Verfahren unterschritten werden. Hierzu gehören die STED-Mikroskopie, lokalisationsmikroskopische Verfahren wie PALM oder STORM und Verfahren unter Nutzung strukturierter Beleuchtung und einer Fluoreszenzsättigung. Diese Verfahren hängen in ihrer Auflösung aber noch von der Wellenlänge ab und sind begrenzt durch das nutzbare Photonenbudget. In der Praxis können mit solchen Verfahren Auflösungen im Bereich von 30 nm bis, in spezielleren Fällen, hinunter zu 20 nm erreicht werden.

Wie im Abschnitt zum Stand der Technik dargelegt, ermöglicht nun die MINFLUX-Nanoskopie Abbildungen mit einer Auflösung im Bereich unterhalb von 2 nm. Eine solche Auflösung wird in dieser Anmeldungsschrift als molekulare Auflösung bezeichnet, weil das Maß von 2 nm ungefähr der Ausdehnung einzelner Fluoreszenzfarbstoffmoleküle entspricht; viele Farbstoffe weisen sogar ausgedehntere Moleküle auf. Es ist zu erwarten, dass eine molekulare Auflösung auch mit Verfahren, bei denen eine MINFLUX-artige Abtastung und Lokalisation unter Verwendung einer Verteilung von Fluoreszenzverhinderungslicht mit einem zentralen lokalen Minimum, wie es beispielsweise in der oben genannten Schrift EP 3 372 990 A1 beschrieben ist, erzielt werden kann. Dieses Verfahren wird in der Folge in dieser Anmeldung als STED-MINFLUX bezeichnet. Beide Verfahren sind aber vor allem wegen des hohen Zeitbedarfs wenig geeignet, um typische biologische Proben in ihrer Gesamtheit abzubilden, sondern es werden in der Regel nur Ausschnitte einer solchen Untersuchung mittels MINFLUX oder STED-MINFLUX untersucht werden können. Im Falle, dass bei Anwendung herkömmlicher Verfahren der Lokalisationsmikroskopie wie beispielsweise PALM oder STORM Fluorophore zur Verfügung stehen, die sehr viele Photonen emittieren können, bevor sie gebleicht sind, ist es theoretisch denkbar, dass auch mit solchen Verfahren eine molekulare Auflösung erzielt werden kann. Auch solche Verfahren sind dann aber, ebenfalls insbesondere wegen eines hohen Zeitbedarfs, wenig geeignet, um typische biologische Proben in ihrer Gesamtheit abzubilden. Um dennoch biologische Proben in ihrer Gesamtheit abbilden zu können und gleichzeitig zumindest besonders interessierende Ausschnitte mit molekularer Auflösung abbilden zu können, ist es daher nötig, andere Bildgebungs- beziehungsweise Mikroskopieverfahren mit einem Verfahren zu kombinieren, welches eine molekulare Auflösung erreicht, insbesondere zum Beispiel mit MINFLUX.

Bei einer solchen Kombination treten allerdings verschiedene Probleme auf. So ist es wünschenswert und in bestimmten Fällen notwendig mit Blick auf die Ziele der Untersuchung der Probe, dass die mit dem anderen Verfahren erhaltenen Bildinformationen mit den molekular aufgelösten Bildinformationen in einen räumlichen Kontext gesetzt werden können, und zwar mit großer Genauigkeit. Hierzu ist es aber notwendig, die Probe vor der Abbildung mit molekularer Auflösung mit dem anderen Verfahren in guter Qualität abzubilden. Dabei entsteht das Problem, dass bei der Abbildung mit dem anderen Verfahren die Probe belastet wird, das heißt, die enthaltenen Fluorophore gebleicht werden. Hierbei besteht in der Regel ein Zusammenhang mit dem Grad des Bleichens und der mit dem anderen Verfahren erzielten Auflösung, weil auch bei solchen Verfahren, die grundsätzlich beugungsbegrenzt sind, die tatsächlich erzielte Auflösung vom genutzten Photonenbudget abhängt, da bei Nutzung nur weniger Photonen die Abbildungsqualität durch Rauscheinflüsse gemindert wird. Das Rauschen resultiert dabei zum einen aus dem Emissionsprozess selbst, der ein Poisson-verteiltes Rauschen der gemessenen Photonenzahlen zur Folge hat, zum anderen aber auch daraus, dass Detektoren selbst ein Rauschen aufweisen, welches stärkeren Einfluss auf die Bildqualität hat, je niedriger die zu messenden beziehungsweise gemessenen Photonenzahlen oder Intensitäten sind. Da es gleichzeitig für die Abbildung mit molekularer Auflösung nötig ist, dass die für diese Abbildung zu nutzenden Fluoreszenzfarbstoffe nicht oder nur wenig gebleicht sind, entsteht ein Zielkonflikt.

Für die Abbildung biologischer Proben beziehungsweise der in diesen enthaltenen Strukturen ist es vielfach notwendig, die jeweils zu untersuchende Probe mit mehreren verschiedenen Farbstoffen anzufärben, um verschiedene Strukturen in fluoreszenzmikroskopischen Abbildungen gegeneinander abgegrenzt, gleichzeitig aber in ihrer räumlichen Beziehung zueinander darstellen zu können. Um nun solche mehrfach gefärbten Proben auch mit molekularer Auflösung in einer Art abbilden zu können, bei der die verschiedenen biologischen Strukturen, die jeweils mit verschiedenen Farbstoffen assoziiert sind, gegeneinander abgegrenzt sind, ist es notwendig, dass zwischen den von verschiedenen Farbstoffen emittierten Fluoreszenzsignalen unterschieden werden kann. Dies für eine Vielzahl verschiedener Proben auf einfache Weise zu ermöglichen, ist dadurch erschwert, dass eine Vorrichtung und ein Verfahren, mit dem zwei bestimmte Farbstoffe gut unterschieden werden können, für die Trennung anderer Farbstoffe ungeeignet sein können. Ein weiteres Problem ist, dass selbst dann, wenn die spektralen Eigenschaften der Farbstoffe, mit denen eine Probe gefärbt ist, grundsätzlich bekannt ist, abhängig von der Probe, z. B. vom pH-Wert der Probe, relevante Abweichungen der spektralen Eigenschaften der Farbstoffe auftreten, sodass eine Trennung mit vorbestimmten Eigenschaften der Vorrichtung und des Verfahrens nicht optimal gelingt.

Die Möglichkeit der Kombination komplementärer Verfahren ist derzeit vielfach spezialisierten Laboren vorbehalten. Gemäß dem oben genannten Artikel "Super-resolution microscopy demystified" (Lothar Schermelleh et. al) müssten Untersuchungen an Proben mit Verfahren der Superauflösungsmikroskopie häufig mit an verschiedenen Plattformen durchgeführten Untersuchungen validiert werden.

Eine Einzelplattform, die einerseits geeignet ist, um für einen breiteren Nutzerkreis kommerziell angeboten zu werden, und die andererseits die Abbildung von biologischen Proben, gegebenenfalls je nach Ausschnitt der Probe, sowohl mit einer beugungsbegrenzten Auflösung von etwa 400 nm bis 250 nm als auch mit einer Superauflösung von etwa 50 nm bis 30 nm und auch mit einer molekularen Auflösung ermöglicht, wobei insgesamt Bildfelder mit lateralen Ausdehnungen von mehreren bis einigen Millimetern aufgenommen werden können, ist bislang nicht bekannt. Ebenso sind keine Verfahren bekannt, die geeignet sind, die oberhalb genannten Möglichkeiten zu bieten und gleichzeitig in einer Weise umgesetzt werden zu können, dass sie in ein Mikroskop als eine Einzelplattform wie oben angegeben implementiert werden könnten. Das bedeutet, derzeit sind keine entsprechenden Verfahren bekannt, für deren Anwendung eine Einzelplattform leicht realisiert werden könnte.

### Zur Problemlösung

Hier setzt nun die Erfindung an und stellt solche Verfahren bereit, die zur Anwendung in einer gemeinsamen Einzelplattform, das heißt einem Mikroskop besonders geeignet sind. Weiter stellt sie ein Mikroskop als eine solche Einzelplattform bereit. Der oben angesprochene Zielkonflikt wird dabei möglichst weitgehend aufgelöst.

Der Zweck des Verfahrens ist, dass eine Bereitstellung einer Einzelplattform, das heißt eines Mikroskops, mit dem das Verfahren ausführbar ist, besonders einfach möglich ist. In dem Verfahren erfolgt ein erstes Aufnehmen von Bilddaten der Probe oder eines Teilbereichs der Probe und ein Bestimmen und Auswählen eines interessierenden Probenbereichs anhand der Bilddaten und eine Erfassung aus der Probe emittierter Fluoreszenzphotonen in mindestens zwei verschiedenen Wellenlängenbereichen, wobei die Erfassung bevorzugt jeweils in zusammenhängenden Wellenlängenbereichen und je Wellenlängenbereich nicht spektral aufgelöst erfolgt.

Im Zusammenhang der vorliegenden Spezifikation (d.h. des Verfahrens und des Mikroskops) bedeutet der Begriff "nicht spektral aufgelöst", dass die innerhalb des jeweiligen zusammenhängenden bzw. einstellbaren Wellenlängenbereichs detektierte Fluoreszenz unabhängig von der Wellenlänge der detektierten Photonen ausgewertet wird. Es wird also innerhalb der einstellbaren Wellenlängenbereiche keine spektrale Information gesammelt und verwendet, also kein Spektrum aufgenommen. Dabei kann die detektierte Fluoreszenz zu einem Gesamtfluoreszenzwert (z.B. einer Fluoreszenzintensität oder einer durch Photonenzählen erhaltenen Zählrate pro Zeiteinheit) zusammengefasst werden. Dabei ist es möglich, die detektierte Fluoreszenz nach einem anderen Parameter als der Wellenlänge aufzuspalten, beispielsweise nach der Fluoreszenzlebensdauer.

Weiter richtet sich das Verfahren darauf, mindestens für eine der Abbildungsarten, das heißt der des ersten Aufnehmens von Bilddaten oder eines lokalisationsmikroskopischen Verfahrens eine Optimierung bereitzustellen. Insgesamt zielt das Verfahren darauf ab, die in der Probe vorhandenen Farbstoffe optimal für eine Abbildung einer Probe zu nutzen oder nutzbar zu machen, wobei die Abbildung sowohl die Abbildung von Strukturen im Größenbereich einiger 10 Mikrometer bis Millimeter als auch die Abbildung von Teilbereichen mit molekularer Auflösung umfasst. Hierbei wird das Verfolgen eines Partikels einer Probe als eine besondere Form der Abbildung aufgefasst.

Konkret wird die gestellte Aufgabe durch ein Verfahren für eine lokalisationsmikroskopische Untersuchung oder zur lokalisationsmikroskopischen Untersuchung einer mit mehreren Farbstoffen gefärbten Probe gelöst, das folgende Schritte umfasst:
- ein erstes Aufnehmen von Bilddaten der Probe oder eines Teilbereichs der Probe,
- ein Bestimmen und Auswählen eines interessierenden Probenbereichs anhand der Bilddaten,
- ein Anregen von Fluorophoren, insbesondere mindestens eines der mehreren Farbstoffe, in einem ersten Teilbereich innerhalb des ausgewählten interessierenden Probenbereichs mit Anregungslicht einer ersten Anregungswellenlänge und ein erstes Detektieren der von den angeregten Fluorophoren in einem ersten Wellenlängenbereich emittierten Fluoreszenzphotonen mit einer ersten Detektionseinheit und
- ein zweites Detektieren der von mit Anregungslicht der ersten Anregungswellenlänge angeregten Fluorophore in einem zweiten Wellenlängenbereich, der sich von dem ersten Wellenlängenbereich unterscheidet, emittierten Fluoreszenzphotonen mit einer oder der ersten Detektionseinheit (mit anderen Worten mit der ersten Detektionseinheit oder mit einer weiteren Detektionseinheit).

Ein solches Verfahren ist aus dem Stand der Technik, beispielsweise aus der im Abschnitt zum Stand der Technik genannten Publikation "Multicolor 3D MINFLUX nanoscopy of mitochondrial MICOS proteins" (Jasmin Pape et. al.) beziehungsweise der zugehörigen Supplemental Information bekannt. Dort erfolgt das erste Aufnehmen ausschließlich in einem Weitfeldverfahren mittels einer EMCCD-Kamera.

Bei dem ersten erfindungsgemäßen Verfahren kann zwar die erste Aufnahme grundsätzlich auf dieselbe Weise durchgeführt werden, sie umfasst bevorzugt aber eine abtastende Aufnahme von Bilddaten.

Mit dem Begriff "Fluorophore mehrerer Farbstoffe" sind im Kontext der vorliegenden Spezifikation (d.h. des ersten bis sechsten Verfahrens und des Mikroskops) fluoreszierende Moleküle mehrerer verschiedener Spezies gemeint, die sich z.B. in ihrer molekularen Struktur unterscheiden und somit insbesondere unterschiedliche Anregungs- oder Emissionsspektren oder eine unterschiedliche Fluoreszenzlebensdauer aufweisen.

Gegenüber dem Stand der Technik ist das erste erfindungsgemäße Verfahren dadurch gekennzeichnet,
- dass die erste Detektionseinheit derart ausgebildet ist, dass der Wellenlängenbereich (insbesondere der erste Wellenlängenbereich), in dem sie (also die erste Detektionseinheit) Fluoreszenzphotonen detektiert, einstellbar ist und dass das Verfahren weiter umfasst:
- (insbesondere anschließend) ein Bestimmen von Wellenlängenbereichen (insbesondere weiteren Wellenlängenbereichen) für eine optimierte ratiometrische Trennung der mehreren Farbstoffe bei einer lokalisationsmikroskopischen Bildaufnahme der Probe in mehreren spektralen Detektionskanälen.

Unter der "ratiometrischen Trennung" von Farbstoffen ist im Kontext der vorliegenden Spezifikation (also des Verfahrens und des Mikroskops) ein Verfahren zu verstehen, bei welchem durch Bestimmen eines Verhältnisses der in den zwei sich unterscheidenden Wellenlängenbereichen detektierten Anzahlen von Fluoreszenzphotonen oder Fluoreszenzintensitäten ein Fluorophor (bzw. das von diesem Fluorophor emittierte Fluoreszenzlicht) einem der mehreren Farbstoffe zuordenbar ist. Dabei beinhaltet der Begriff "ratiometrische Trennung" im Kontext dieser Spezifikation auch den Fall, das in einem der Wellenlängenbereiche kein Fluoreszenzsignal detektiert wird. Das entsprechende Verhältnis wäre dann, je nachdem ob es als Quotient zwischen der in einem ersten Wellenlängenbereich detektierten Anzahl oder Intensität und der in einem zweiten Wellenlängenbereich detektierten Anzahl oder Intensität definiert wird oder ob es als Kehrwert des genannten Quotienten definiert wird, gleich Null oder "gleich Unendlich". Selbstverständlich kann auch in diesem Fall das Zuweisen eines Fluorophors zu einem bestimmten Farbstoff auf Basis des Verhältnisses erfolgen. Weiterhin muss zur Verwirklichung einer ratiometrischen Trennung in nicht erfindungsgemäßen Verfahren nicht zwangsläufig das oben genannte Verhältnis gebildet werden. Die in den zwei unterschiedlichen Wellenlängenbereichen gemessenen Signale können in solchen nicht erfindungsgemäßen Verfahren auch auf andere Weise ausgewertet werden, um ein Fluorophor einem der mehreren Farbstoffe zuzuordnen. Gemäß einer Ausführungsform werden der erste Wellenlängenbereich und/oder der zweite Wellenlängenbereich für die optimierte ratiometrische Trennung der Farbstoffe auf Basis der bestimmten (weiteren) Wellenlängenbereiche eingestellt, bzw. angepasst.

Die verfahrensgemäß bestimmten Wellenlängenbereiche für eine optimierte ratiometrische Trennung der mehreren Farbstoffe können anschließend für eine lokalisationsmikroskopische Aufnahme, insbesondere eine MINFLUX-Aufnahme genutzt werden, oder sie können alternativ oder zusätzlich zusammen mit Informationen über die Probe beispielsweise in eine Datenbank gespeichert werden. In dem interessierenden Probenbereich wird ein Lokalisieren oder ein Verfolgen vereinzelter Fluorophore (mindestens eines der mehreren Farbstoffe) nach einem MINFLUX-Verfahren oder einem STED-MINFLUX-Verfahren durchgeführt, wobei das Detektieren der Fluoreszenzphotonen jeweils in den für eine optimierte ratiometrische Trennung der mehreren Farbstoffe bestimmten Wellenlängenbereichen erfolgt.

Im Kontext der vorliegenden Spezifikation (also bezüglich des ersten bis sechsten Verfahrens und des Mikroskops) bezeichnet der Begriff "MINFLUX-Verfahren" ein Verfahren, bei dem ein lokales Intensitätsminimum (insbesondere einer Intensitätsnullstelle) einer Lichtverteilung (insbesondere Anregungslichtverteilung) an einer Mehrzahl von Positionen relativ zur Lage eines vereinzelten Fluorophors platziert wird, wobei aus den zu den einzelnen Positionen gemessenen Photonenzahlen die Position des Fluorophors abgeschätzt wird.

Unter einem STED-MINFLUX-Verfahren ist im Kontext der vorliegenden Spezifikation (also bezüglich des ersten bis sechsten Verfahrens und des Mikroskops) ein Verfahren zu verstehen, bei dem ein lokales Intensitätsminimum einer STED (stimulierte Emissionsdepletion)- Lichtverteilung an einer Mehrzahl von Positionen relativ zur Lage eines mit Anregungslicht beleuchteten vereinzelten Fluorophors platziert wird, wobei aus den zu den einzelnen Positionen gemessenen Photonenzahlen die Position des Fluorophors abgeschätzt wird.

Mit dem Lokalisieren vereinzelter Fluorophore ist im Zusammenhang der vorliegenden Spezifikation ein Verfahren gemeint, bei dem fluoreszierende, d.h. in einem aktiven Zustand befindliche Fluorophore, deren Fluoreszenzphotonen in dem verwendeten Anregungs- und Emissions-Wellenlängenbereich detektierbar sind, einen Abstand zueinander aufweisen, der mindestens der optischen Beugungsgrenze bei den verwendeten Wellenlängen entspricht. Diese Bedingung kann insbesondere durch Wahl geeigneter Farbstoffkonzentrationen bei der Markierung der Probe sowie im Fall von fotoaktivierbaren oder blinkenden Farbstoffen durch Wahl von Aktivierungslicht-Parametern (z.B. Leistung oder Pulsrate) und/oder Pufferbedingungen erfüllt werden. Die Gesamtdichte der Fluorophore in der Probe kann durchaus so gewählt sein, dass bestimmte Fluorophore einen Abstand unter der Beugungsgrenze aufweisen, solange diese nicht gleichzeitig aktiv sind oder in unterschiedlichen Wellenlängenbereichen angeregt und/oder detektiert werden.

Abhängig von den Eigenschaften der Probe kann ein solches Verfahren in einer ersten Weiterbildung in der Weise ausgeführt werden, dass der erste Teilbereich innerhalb des interessierenden Probenbereichs anhand der Bilddaten so ausgewählt wird, dass in ihm ausschließlich oder im Wesentlichen nur Fluorophore eines ersten Farbstoffs enthalten sind und dass in dem ersten Teilbereich eine Mehrzahl von Fluorophoren mit Anregungslicht der ersten Anregungswellenlänge angeregt wird und dass aus dem ersten und dem zweiten Detektieren ein erster und ein zweiter die spektrale Emission des ersten Farbstoffs charakterisierender Wert erhalten werden. Eine solche Auswahl des ersten Teilbereichs ist dann möglich und sinnvoll, wenn in den zuerst aufgenommenen Bilddaten Strukturen abgebildet sind, von denen der Nutzer weiß, dass in diesen nur mit dem Vorhandensein einer einzigen Farbstoffsorte zu rechnen ist. Dann nämlich können die spektralen Eigenschaften des betreffenden Farbstoffs in der konkreten Probenumgebung sehr schnell bestimmt werden, weil diese Bestimmung dann an einem Ensemble einer Vielzahl von Fluorophoren des betreffenden Farbstoffs durchgeführt werden kann. Hierdurch steht ein großes und somit rauscharmes Signal zur Verfügung, ohne dass die einzelnen Farbstoffmoleküle des betreffenden Farbstoffs einer größeren Belastung mit Anregungslicht ausgesetzt werden. Schon aus dem Verhältnis der in den zwei sich unterscheidenden Wellenlängenbereichen detektierten Anzahlen von Fluoreszenzphotonen oder den Fluoreszenzintensitäten kann Information erhalten werden, die eine optimierte ratiometrische Trennung der unterschiedlichen Farbstoffe ermöglicht. Dies gilt sowohl dann, wenn das Verhältnis der Intensitäten einem vorbekannten Intensitätsverhältnis entspricht, als auch dann, wenn es von einem solchen vorbekannten Verhältnis signifikant abweicht. Es ist auch möglich, dass aus den in den zwei Wellenlängenbereichen erhaltenen Messwerten Rückschlüsse auf Hintergrundsignale gezogen werden können, die sich auf die für eine optimierte ratiometrische Trennung festzulegenden Wellenlängenbereiche auswirken.

Dieses Verfahren gemäß der ersten Weiterbildung kann nun in einer Ausgestaltung vorteilhaft ausgeführt werden, indem zusätzlich ein zweiter Teilbereich und optional weitere Teilbereiche innerhalb des interessierenden Probenbereichs anhand der Bilddaten so ausgewählt wird oder werden, dass in ihm oder jeweils in ihnen ausschließlich oder im Wesentlichen nur Fluorophore eines zweiten oder eines weiteren Farbstoffs enthalten sind und dass in dem zweiten oder jeweils in einem weiteren Teilbereich eine Mehrzahl von Fluorophoren mit Anregungslicht der ersten Anregungswellenlänge angeregt wird und dass ein Detektieren der von den jeweiligen angeregten Fluorophoren emittierten Fluoreszenzphotonen in dem ersten und dem zweiten Wellenlängenbereich erfolgt und dass jeweils ein erster und ein zweiter die spektrale Emission des zweiten oder des jeweiligen weiteren Farbstoffs charakterisierender Wert erhalten werden. Mit anderen Worten: Vorteilhafterweise wird entsprechend wie für den ersten Farbstoff auch für den zweiten und gegebenenfalls für weitere oder alle weiteren in der Probe vorhandenen Farbstoffe ein Bereich ausgewählt, in dem ausschließlich oder nahezu ausschließlich Farbstoffmoleküle des zweiten oder des betreffenden weiteren Farbstoffs vorhanden sind. Auch allein aus den hierfür neu gewonnenen Informationen können Rückschlüsse der Art wie für den ersten Farbstoff gezogen werden. Durch Vergleich der für die verschiedenen Farbstoffe erhaltenen Verhältniswerte kann nun aber noch besser auf für eine optimierte ratiometrische Trennung festzulegende Wellenlängenbereiche geschlossen werden. Diese Ausgestaltung kann auch dahingehend modifiziert werden, dass anstelle des ersten und des zweiten Wellenlängenbereichs zwei neue Wellenlängenbereiche genutzt werden. Das Anregen innerhalb jedes Teilbereichs kann bevorzugt in einer Weise erfolgen, dass der Teilbereich oder ein Ausschnitt des Teilbereichs mit fokussiertem Anregungslicht abgetastet wird. Die Verwendung fokussierten Anregungslichts erleichtert es, selektiv nur innerhalb des Teilbereichs anzuregen. Das Abtasten reduziert die lokale Belastung der Probe.

Sowohl die erste Weiterbildung als auch ihre Ausgestaltung können nun bevorzugt derart weitergebildet werden, dass ein weiteres Detektieren der von jeweils mit Anregungslicht der ersten Anregungswellenlänge angeregten Fluorophore des jeweils ausgewählten Farbstoffs, also des ersten, des zweiten oder eines Farbstoffs der weiteren Farbstoffe emittierten Fluoreszenzphotonen in einem oder mehreren weiteren Wellenlängenbereichen, die sich voneinander und von dem ersten und dem zweiten Wellenlängenbereich unterscheiden, erfolgt, sodass aus der Messung an der mit mehreren Farbstoffen gefärbten Probe eine Mehrzahl von die spektrale Emission des ersten, des zweiten oder eines Farbstoffs der weiteren Farbstoffe charakterisierenden Werten erhalten wird. Mit anderen Worten: Vorteilhafterweise werden, insbesondere wenn anhand der aus den vorangehenden Messungen erhaltenen Werte noch eine zu große Unsicherheit über die für eine optimierte ratiometrische Trennung festzulegenden Wellenlängenbereiche besteht, für jeden der Farbstoffe Messungen der Fluoreszenz in mindestens einem weiteren Wellenlängenbereich durchgeführt. Hierdurch wird die Information über die Emissionsspektren der betreffenden Farbstoffe verbessert, sodass grundsätzlich eine bessere Bestimmung der für eine optimierte ratiometrische Trennung festzulegenden Wellenlängenbereiche möglich ist. Allerdings ist dabei zu beachten, dass jede Messung mittels Anregen und Detektieren die Probe belastet, das heißt, die Probe bleichen kann, und damit das für die folgenden Messung zur Verfügung stehende Photonenbudget bzw. die Dichte der zur Verfügung stehenden Fluorophore reduziert. Letzteres kann dann in Kauf genommen werden, wenn für die Bestimmung der für eine optimierte ratiometrische Trennung festzulegenden Wellenlängenbereiche ein anderer Bereich innerhalb der Probe oder gar eine andere Probe genutzt werden kann als der schließlich lokalisationsmikroskopisch zu untersuchende Bereich. Es ist auch möglich, eine Probe, die bereits befriedigend abgebildet ist, für eine Bestimmung der für eine optimierte ratiometrische Trennung festzulegenden Wellenlängenbereiche zu nutzen, sodass die hieraus erhaltenen Werte für andere vergleichbare Proben genutzt werden können.

In einer zweiten Weiterbildung des Verfahrens wird der erste Teilbereich innerhalb des interessierenden Probenbereichs anhand der Bilddaten so ausgewählt, dass in ihm Fluorophore mehrerer Farbstoffe enthalten sind, und in dem ersten Teilbereich werden wiederholt vereinzelte Fluorophore angeregt, wobei insgesamt Fluorophore aller der mehreren Farbstoffe angeregt werden. Das Anregen innerhalb des ersten Teilbereichs kann in einer Weise erfolgen, dass der Teilbereich oder ein Ausschnitt des Teilbereichs mit fokussiertem Anregungslicht abgetastet wird. Die Verwendung fokussierten Anregungslichts erleichtert es, selektiv nur innerhalb des Teilbereichs anzuregen. Das Abtasten erleichtert es, vereinzelte Moleküle, die während eines betreffenden Zeitabschnitt in einem zur Fluoreszenz anregbaren Zustand sind, aufzufinden. Alternativ oder zusätzlich kann insbesondere auch Aktivierungslicht eingesetzt werden, mit dem der beispielsweise fokale Bereich, der auch mit Anregungslicht beaufschlagt wird, beaufschlagt wird, um in ihm Fluorophore aus einem nicht zur Fluoreszenz anregbaren Zustand in einen anregbaren Zustand zu schalten. Die Aktivierung erfolgt dann so lange nicht, wie von dem vereinzelten Molekül Fluoreszenz detektiert werden kann. Wenn dieses Molekül aus dem zu Fluoreszenz anregbaren Zustand in einen nicht anregbaren gewechselt ist, kann dann die Aktivierung wiederholt werden, bis erneut von einem vereinzelten Molekül Fluoreszenz detektiert werden kann. Da in dem Teilbereich mehrere Farbstoffe vorhanden sind, wird auf diese Weise bei mehrfacher Wiederholung Fluoreszenz der mehreren Farbstoffe detektiert.

Prinzipiell könnte selbst bei dieser zweiten Weiterbildung das Detektieren sowohl in dem ersten als auch in dem zweiten Wellenlängenbereich mit derselben Detektionseinheit erfolgen. Dies erscheint allerdings als nur schwer praktikabel und es führt zu einer erhöhten Belastung der Probe. Deswegen ist es insbesondere bei dieser Weiterbildung des ersten Verfahrens stark bevorzugt, dass das Detektieren der Fluoreszenzphotonen in dem ersten und in dem zweiten Wellenlängenbereich auf getrennten (bzw. mittels getrennter) Detektionseinrichtungen bzw. Detektionseinheiten, die gleichzeitig aktiv sind, erfolgt. Dies ist auch bei der ersten Weiterbildung bevorzugt. Es hat gegenüber der Erfassung mit nur einer Detektionseinrichtung bzw. Detektionseinheit, die einmal auf den ersten Wellenlängenbereich und einmal auf den zweiten Wellenlängenbereich eingestellt wird, den Vorteil, dass die Erfassung der spektralen Informationen einerseits schneller erfolgt, andererseits aber auch mit einer geringeren Belastung der Probe einhergeht.

Die zweite Weiterbildung des Verfahrens kann nun bevorzugt so ausgestaltet werden, dass ein weiteres Anregen von Fluorophoren mit Anregungslicht der ersten Anregungswellenlänge und ein weiteres Detektieren in zwei weiteren Wellenlängenbereichen erfolgt, wobei mindestens einer der zwei weiteren Wellenlängenbereiche weder der erste noch der zweite Wellenlängenbereich ist. Hierdurch wird grundsätzlich die Information, die zum Bestimmen von Wellenlängenbereichen für eine optimierte ratiometrische Trennung genutzt werden kann, verbessert. Ähnlich wie bei einer entsprechenden Ausgestaltung der ersten Weiterbildung ist aber auch hier beispielsweise zu beachten, dass jedes Anregen zu einer Belastung der Probe führt, die das Photonenbudget bzw. die Dichte der zur Verfügung stehenden Fluorophore, das oder die für die Abbildung mit molekularer Auflösung genutzt werden kann, verringert wird.

Sowohl bei der ersten Weiterbildung als auch bei der zweiten Weiterbildung kann es bevorzugt sein, dass der erste Wellenlängenbereich und der zweite Wellenlängenbereich bei einer ersten Grenzwellenlänge einander angrenzend sind. Es kann dann weiter bevorzugt sein, dass jeweils weitere Wellenlängenbereiche, die bei weiterem Detektieren genutzt werden, ebenfalls bei einer Grenzwellenlänge oder einer weiteren Grenzwellenlänge einander angrenzend sind, und auch, dass mehrfach ein weiteres Anregen und Detektieren erfolgt, wobei jeweils eine andere weitere Grenzwellenlänge gewählt ist, kann bevorzugt sein.

Beide Weiterbildungen können auch vorteilhaft derart ausgestaltet werden, dass der erste Wellenlängenbereich und/oder einer der weiteren Wellenlängenbereiche Wellenlängen umfasst, die kleiner sind als die erste Anregungswellenlänge; bevorzugt können sie so ausgestaltet werden, dass der erste Wellenlängenbereich und / oder einer der weiteren Wellenlängenbereiche ausschließlich Wellenlängen umfasst, die kleiner sind als die erste Anregungswellenlänge. Insbesondere bei dieser bevorzugten Ausgestaltung wird zwar in dem betreffenden Wellenlängenbereich vergleichsweise wenig Fluoreszenz detektiert werden können. Der Vorteil ist aber, dass gerade in dem Wellenlängenbereich unterhalb der Anregungswellenlänge die Fluoreszenzemission unterschiedlicher Farbstoffe sehr große Unterschiede zueinander aufweisen kann, sodass eine ratiometrische Trennung der Farbstoffe besonders gut möglich ist. Für die spätere Lokalisation mit molekularer Auflösung wird dann im Wesentlichen der andere Wellenlängenbereich genutzt werden, während der unterhalb der Anregungswellenlänge liegende Wellenlängenbereich nur für die Zuordnung einer Lokalisation zu einem Farbstoff genutzt wird. Bei dieser Ausgestaltung wird der erste Wellenlängenbereich, wenn dieser ausschließlich Wellenlängen umfasst, die kleiner sind als die erste Anregungswellenlänge, bevorzugt gerade nicht an den zweiten Wellenlängenbereich angrenzen. Entsprechendes gilt für bei einem weiteren Detektieren verwendete weitere Wellenlängenbereiche. Hier wird jeweils der Wellenlängenbereich, der ausschließlich Wellenlängen umfasst, die kleiner sind als die erste Anregungswellenlänge, nicht an den jeweils anderen weiteren Wellenlängenbereich angrenzen. Vielmehr wird bevorzugt gerade die Anregungswellenlänge in keinem der Wellenlängenbereiche enthalten sein. Dies hat generell den Vorteil, dass gestreutes Anregungslicht die Fluoreszenzdetektion nicht verfälschen kann. Weiterhin ermöglicht dies eine Einkopplung des Anregungslichts in einen für Anregung und Detektion gemeinsam genutzten Strahlengang mittels eines Farbteilers, der dann bevorzugt als schmalbandiger Farbteiler mit einer Bandbreite von wenigen Nanometern, beispielsweise von weniger als 15 nm, 10 nm oder 5 nm ausgebildet sein kann.

Die zweite Weiterbildung kann bevorzugt derart ausgestaltet werden, dass eine Zuordnung von jeweils während der Detektion in zwei Wellenlängenbereichen, in dem ersten und dem zweiten Wellenlängenbereich und / oder in einem und einem anderen Wellenlängenbereich der zwei weiteren Wellenlängenbereiche, detektierten Fluoreszenzphotonen zu Bursts der vereinzelten Fluorophore erfolgt und dass zu den Bursts jeweils die Anzahlen der im einen und dem anderen Wellenlängenbereich detektierten Fluoreszenzphotonen bestimmt werden. Es werden also Histogramme gebildet. Bevorzugt werden dann aus diesen Histogrammen die Wellenlängenbereiche für eine optimierte ratiometrische Trennung bestimmt. Aus dem Stand der Technik ist bekannt, wie aus solchen Histogrammen die Qualität der Trennung der Farbstoffe beurteilt werden kann. Liegen mehrere Histogramme vor, so kann nun beurteilt werden, welches Histogramm und somit welche Auswahl von Wellenlängenbereichen zu der besten ratiometrischen Trennung führt.

Vorteilhafterweise überlappen sich bei allen vorangehend beschriebenen Verfahren die wechselweise unterschiedlichen Wellenlängenbereiche nicht. Dies bedeutet, der erste und der zweite Wellenlängenbereich überlappen nicht und, wenn wiederholt Messungen in mehreren Wellenlängenbereichen vorgenommen werden, so überlappen sich die in einem Schritt der Wiederholung genutzten Wellenlängenbereiche nicht. Dieses Vorgehen hat den Vorteil, dass es sich apparativ leicht umsetzen lässt, beispielsweise unter Verwendung einer Detektionsapparatur mit zwei oder mehreren einzelnen Detektionseinheiten, wie sie aus der im Abschnitt zum Stand der Technik eingangs genannten Patentschrift DE 10 2018 126 232 B3 bekannt ist.

Bevorzugt erfolgt bei dem Verfahren und seinen beiden Weiterbildungen ein Aufnahmeschritt des ersten Aufnehmens von Bilddaten, indem die Probe oder ein Ausschnitt der Probe mittels einer ersten Ablenkeinheit, die sich im optischen Pfad des Anregungslichts befindet, mit einem Anregungslicht abgetastet wird. Das bei dem ersten Aufnehmen von Bilddaten verwendete Anregungslicht kann das Anregungslicht der ersten Anregungswellenlänge sein, es kann aber auch Anregungslicht einer anderen Wellenlänge sein oder zwar die erste Anregungswellenlänge aufweisen, aber von einer anderen Lichtquelle als der des Anregungslichts der ersten Wellenlänge stammen. Der Vorteil der Abtastung mittels der ersten Ablenkeinheit, die sich im Strahlengang des Anregungslichts befindet, liegt darin, dass die Strahlengänge des für die Abtastung während des ersten Aufnehmens verwendeten Anregungslichts und des Anregungslichts der ersten Wellenlänge leichter zueinander justiert werden beziehungsweise in einem justierten Zustand erhalten werden können. Dies erleichtert, dass tatsächlich die im beim ersten Aufnehmen von Bilddaten erhaltenen Bild ausgewählten Teilbereiche auch tatsächlich mit dem ersten Anregungslicht beaufschlagt werden.

In einer bevorzugten Ausführungsform umfasst, dies gilt sinngemäß ausdrücklich für alle erfindungsgemäßen Verfahren, ggf. allerdings als obligatorisches Merkmal, das erste Aufnehmen ein konfokales Abtasten oder ein gemeinsames Abtasten mit fokussiertem Anregungs- und Fluoreszenzverhinderungslicht, bevorzugt mit STED-Licht. Konfokales Abtasten bedeutet hier, dass die Fluoreszenzemission konfokal entscannt detektiert wird. Eine konfokale Detektion liegt dabei auch vor, wenn in der Fokalebene der Detektion eine Detektionseinheit angeordnet ist, die eine Mehrzahl von einzelnen Detektorelementen oder Detektoren zugeordnete Aperturen aufweist, die derart ausgedehnt und angeordnet sind, dass das Beugungsbild einer Punktlichtquelle ortsaufgelöst erfasst wird. Eine solche Detektionseinheit kann auch in Verbindung mit der Anwendung von Fluoreszenzverhinderungslicht verwendet werden. Weiter bevorzugt erfolgt hierbei die Detektion bei dem konfokalen Abtasten oder dem gemeinsamen Abtasten mit fokussiertem Anregungs- und Fluoreszenzverhinderungslicht in einem zusammenhängenden Wellenlängenbereich und nicht spektral aufgelöst. Der Vorteil hiervon ist, dass durch die Wahl eines zusammenhängenden Wellenlängenbereichs und den Verzicht auf eine spektrale Auflösung innerhalb dieses Wellenlängenbereichs die gesamte Lichtmenge aus dem ausgewählten Wellenlängenband mit genau einem Detektor erfasst wird, sodass das beim Messprozess erhaltene Signal auch das Rauschen von ausschließlich einem einzigen Detektor enthält. Dies ermöglicht eine hohe Abbildungsqualität bei geringer Bestrahlungsintensität. Ein weiterer Vorteil besteht dann, wenn bei Beginn des Abtastens die Probe kaum bekannt ist. Es ist dann nicht möglich, ein auf die Probenstruktur bereits optimal abgestimmtes Abbildungsverfahren unter Verwendung mehrerer Detektionswellenlängen auszuwählen. Durch die Wahl eines zusammenhängenden Wellenlängenbereichs für die Detektion kann aber sichergestellt werden, dass alle innerhalb des Wellenlängenbereichs emittierte Fluoreszenz erfasst wird. Obwohl eine Unterscheidung verschiedener Farbstoffe so nicht möglich ist, wird in der Mehrzahl der Fälle dennoch ein Bilddatensatz erhalten, der für eine Auswahl von interessierenden Bereichen und von Teilbereichen innerhalb eines interessierenden Bereichs geeignet ist.

In einer weiteren Ausgestaltung umfasst, dies gilt sinngemäß ausdrücklich für alle erfindungsgemäßen Verfahren, das erste Aufnehmen von Bilddaten beim Verfahren einen Aufnahmeschritt nach einem Differentialinterferenzkontrastverfahren, bevorzugt nach einem scannenden Differentialinterferenzkontrastverfahren. Ein Differentialinterferenzkontrastverfahren hat den Vorteil, dass die in der Probe enthaltenen Fluorophore bei der Abbildung nicht oder zumindest extrem wenig belastet, das heißt gebleicht werden. Die Auswahl eines scannenden Differentialinterferenzkontrastverfahrens hat den Vorteil, dass für den Abtastprozess die erste Ablenkeinheit genutzt werden kann. Dies wiederum ermöglicht beispielsweise, dass das erste Aufnehmen von Bilddaten ein Aufnehmen mittels eines scannenden Differentialinterferenzkontrastverfahren umfassen kann, anschließend eine Auswahl eines Bereichs der Probe, der anschließend als Teil des ersten Aufnehmens mittels konfokalen Abtastens oder mittels gemeinsamen Abtastens mit fokussiertem Anregungs- und Fluoreszenzverhinderungslicht, bevorzugt mit STED-Licht abgebildet werden kann. In dem zuletzt erhaltenen Bild werden dann der interessierende Bereich und der oder die Teilbereiche ausgewählt, wobei eine Berücksichtigung des Differentialinterferenzkontrastbildes erfolgen kann. Da bei beiden während des ersten Aufnehmens angewendeten Verfahren dieselbe Ablenkeinheit verwendet wird, sind die Bilder relativ zueinander gut justiert.

In der Regel erfolgt auch die Detektion bei Abbildung nach einem STED-Verfahren entscannt, häufig mit Anwendung konfokaler Detektion. Zusätzlich oder alternativ zu der konfokalen Detektion oder der entscannten Detektion kann auch eine Weitfelddetektion erfolgen. Wenn diese zusätzlich erfolgt, kann das bei einer Weitfelddetektion erhaltene Bild mit dem bei entscannter Detektion erhaltenen Bild aligniert werden.

Das erste Aufnehmen von Bilddaten kann bei allen erfindungsgemäßen Verfahren auch einen Aufnahmeschritt nach einem Weitfeldfluoreszenzverfahren umfassen, das heißt nach einem Verfahren, bei dem auch die Anregung mittels Weitfeldbeleuchtung erfolgt. Beispielsweise kann zunächst ein Übersichtsbild mittels Weitfeldfluoreszenzmikroskopie aufgenommen werden, im Übersichtsbild kann ein Bereich ausgesucht werden, der konfokal abgetastet wird. Bei der konfokalen Abtastung kann dann zusätzlich eine Weitfelddetektion erfolgen, insbesondere in Randbereichen des ausgewählten Bereichs. Anhand der sowohl im Weitfeld als auch entscannt abgebildeten Bildteile können das Weitfeldbild und das Abtastbild aligniert werden. In dem alignierten Abtastbild können dann der interessierende Bereich und der Teilbereich oder die Teilbereiche ausgewählt werden.

In einer weiteren Ausgestaltung umfasst das Verfahren ein Lokalisieren oder ein Verfolgen vereinzelter Fluorophore nach einem MINFLUX-Verfahren oder einem STED-MINFLUX-Verfahren in dem interessierenden Bereich, wobei das Detektieren der Fluoreszenzphotonen jeweils in den für eine optimierte ratiometrische Trennung der mehreren Farbstoffe bestimmten Wellenlängenbereichen erfolgt. Alternativ oder zusätzlich werden die für eine optimierte ratiometrische Trennung der mehreren Farbstoffe bestimmten Wellenlängenbereiche in eine Datenbank gespeichert, wobei der Begriff Datenbank hier weit auszulegen ist. Wichtig ist lediglich, dass die entsprechenden Daten zusammen mit weiteren Daten derart abgespeichert werden, dass auf sie bei späteren Untersuchungen an derselben oder an anderen vergleichbaren Proben zugegriffen werden kann.

Es ist auch möglich, dass sich die für eine optimierte ratiometrische Trennung der mehreren Farbstoffe zu verwendenden Wellenlängenbereiche während des Abbildes ändern oder dass diese in unterschiedlichen Unterbereichen des interessierenden Bereichs verschieden sind. Verfahrensgemäß können nun laufend und / oder abhängig von abzubildenden Teilbereichen für eine ratiometrische Trennung der mehreren Farbstoffe optimierte Wellenlängenbereiche bestimmt und entsprechend angewendet werden. Solche Veränderungen können sich beispielsweise sowohl aus der Änderung der Fluoreszenzeigenschaften der verwendeten Farbstoffe in der Probe selbst ergeben, sie können sich aber auch aus einer Änderung von Hintergrundfluoreszenz oder aus insbesondere einer Ortsabhängigkeit der Häufigkeiten der verwendeten Fluorophore ergeben. Sie kann auch abhängig von der konkreten, ggf. ortsabhängigen Messaufgabe sein. So kann es beispielsweise in einem Teilbereich wichtig sein, dass beim Lokalisieren ein bestimmter Farbstoff besonders empfindlich erfasst wird, während es gleichzeitig wenig kritisch ist, wenn die Lokalisation eines anderen Farbstoffs fälschlich dem bestimmten Farbstoff zugeordnet wird, und es kann in einem anderen Bereich wichtig sein, dass insbesondere Fehlzuordnungen ausgeschlossen werden.

Durch die Verwendung mehrerer Anregungswellenlängen wird es ermöglicht, mehrere Farbstoffe mit stark unterschiedlichen Anregungsspektren für eine mehrfarbige Bildaufnahme mittels eines MINFLUX- oder STED-MINFLUX-Verfahrens zu nutzen. Dies ist ein wichtiger Vorteil, da ja eine Aufgabe der Erfindung ist, eine nanoskopische Abbildung mit bis zu molekularer Auflösung in den räumlichen Kontext mikroskopischer Abbildungen zu setzen oder ein nanoskopisches Verfolgen einzelner Moleküle im räumlichen Kontext einer mikroskopischen Abbildung durchzuführen. Beispielsweise in der Konfokalmikroskopie werden Fluorophorpaarungen mit Partnern, die über die Anregung getrennt werden, regelmäßig genutzt. Das erfindungsgemäße Verfahren ermöglicht die Nutzung solcher Paare auch für die MINFLUX-Mikroskopie. Auch wenn die Verwendung mehrerer Anregungswellenlängen anstatt nur einer einen Nachteil hinsichtlich der Kolokalisierbarkeit der verschiedenen Fluorophore hat, so überwiegt hier der Vorteil. Zumindest die jeweils mittels einer der beiden verwendeten Anregungswellenlänge aufgenommenen Teilbilder können nämlich jedes für sich gut, das heißt mit einer Genauigkeit entsprechend der Ortsauflösung des ersten Aufnehmens, eingebettet werden in das bei dem ersten Aufnehmen erhalten Bild.

Das erfindungsgemäße Mikroskop ist schließlich zur Ausführung des erfindungsgemäßen Verfahrens ausgebildet. Das erfindungsgemäße Mikroskop weist
- einen Laser, eingerichtet zur Anregung von Fluoreszenz,
- eine Abtasteinheit, eingerichtet zum rasternden Abtasten einer Probe mit fokussiertem Anregungslicht,
- eine Detektionseinheit, die eingerichtet ist, Fluoreszenzphotonen, die aus der Probe über einen optischen Pfad in eine zum Fokus des Anregungslichts konjugierte Ebene geleitet werden, innerhalb einstellbarer spektraler Bereiche nicht spektral aufgelöst zu detektieren, und
- eine Einrichtung, bevorzugt einen variabel einstellbaren Wellenfrontmodulator,eingerichtet zur Beeinflussung einer Wellenfront von Anregungslicht derart, dass das Anregungslicht am Ort der Probe in einem Fokusbereich eine Intensitätsverteilung mit einem zentralen Minimum ausbildet und
- eine Steuereinheit, eingerichtet zur Durchführung eines MINFLUX-Verfahrens auf.

Die Steuereinheit ist zur Durchführung des zuvor beschriebenen Verfahrens ausgebildet. Bevorzugt weist das Mikroskop mindestens zwei Detektionseinheiten, die jeweils eingerichtet sind, Fluoreszenz innerhalb einstellbarer spektraler Bereiche nicht spektral aufgelöst zu detektieren, auf, wobei bevorzugt mindestens eine der Detektionseinheiten eingerichtet ist, ein Beugungsbild eines Punktobjektes ortsaufgelöst zu erfassen.

Bevorzugt weist das Mikroskop ein Stativ mit einem Probenträger, einem Objektiv, welches in einer Objektivwechselvorrichtung gehaltert ist, und einer Tubuslinse auf, wobei die Abtasteinheit, die Tubuslinse und das Objektiv entlang eines optischen Pfads angeordnet sind und wobei die Detektionseinheit in einem optischen Pfad angeordnet ist, der das Objektiv, die Tubuslinse und die Abtasteinheit umfasst. Diese Bauart hat den Vorteil, dass für das erfindungsgemäße Mikroskop Grundkomponenten, die auch für nicht erfindungsgemäße Mikroskope zur Anwendung kommen können, in großem Umfang genutzt werden können. Bevorzugt weist das Mikroskop in der Objektivwechselvorrichtung mehrere unterschiedliche Objektive auf. Dies ermöglicht, Objektive verschiedener Vergrößerungen einzusetzen, um damit verschieden große Bildfelder aufzunehmen. So kann beispielsweise das erste Aufnehmen in den Verfahren leicht derart ausgeführt werden, dass zunächst ein Übersichtsbild mit einem Objektiv niedriger Vergrößerung aufgenommen wird und anschließend ein Ausschnittsbild mit einem Objektiv höherer Vergrößerung.

Die Verwendung eines Stativs hat zudem den Vorteil, dass vergleichsweise einfach weitere Komponenten ergänzt werden können. So kann zum Beispiel an dem Stativ ein Detektor für die Aufnahme von Bildern unter Erfassung eines differentiellen Interferenzkontrasts angebracht werden. Dementsprechend weist das Mikroskop bevorzugt ein solchen Detektor zur Erfassung eines differentiellen Interferenzkontrasts auf, der am Stativ lösbar anbringbar ist. Er soll lösbar anbringbar sein, damit er dann, wenn er nicht benötigt wird, keinen Platz in einem optischen Pfad beansprucht und dessen Nutzung für andere Zwecke, zum Beispiel die direkte visuelle Beobachtung durch einen Beobachter verhindert. Wenn das Mikroskop einen solchen Detektor aufweist, dann ist die Steuereinheit des Mikroskops bevorzugt mit dem Detektor zur Erfassung eines differentiellen Interferenzkontrasts verbunden oder verbindbar und außerdem eingerichtet, den Detektor anzusteuern und dessen Detektionssignale zu verarbeiten.

In einer Variante weist das Mikroskop einen Weitfelddetektor auf. Dieser kann bei Verwendung eines Stativs beispielsweise an einen am Stativ vorhandenen Kameraport angeschlossen sein.

Bevorzugt weist das Mikroskop eine weitere Ablenkeinheit auf, die in einem optischen Pfad zur Beleuchtung der Probe und nicht in dem Pfad zu der Detektionseinheit angeordnet ist. Diese Einheit ist eingerichtet, die für die Durchführung des MINFLUX- oder des STED-MINFLUX-Verfahrens besonders nützliche extrem schnelle, aber auf sehr kleine Bereiche, die Ausdehnungen in der Größenordnung von 1 µm aufweisen, Abtastung zu ermöglichen. Eine solche Einheit kann beispielsweise eine elektro-optische Ablenkeinheit sein oder aus mehreren elektro-optischen Ablenkeinheiten aufgebaut sein.

Alternativ kann auch die erste Ablenkeinheit ausgebildet sein, die kleinräumige Abtastung auszuführen. Dies verlangsamt zwar in der Regel die Abtastung, aber reduziert den apparativen Aufwand erheblich. Insbesondere da das erfindungsgemäße Mikroskop insgesamt ausgebildet ist, auch mittels anderer Verfahren als dem MINFLUX-Verfahren hochaufgelöste oder, insbesondere bei Integration eines STED-Lasers, super-aufgelöste Bilder aufzunehmen, kann diese Variante sinnvoll sein, da die Durchführung des MINFLUX-Verfahrens nicht zwingend die Hauptanwendung ist und nur bei besonderem Bedarf vorgenommen wird, sodass der Zeitverlust weniger ins Gewicht fällt.

Bevorzugt weist dann das Mikroskop einen gepulsten Laser zur Beleuchtung der Probe mit Fluoreszenzverhinderungslicht, bevorzugt mit STED-Licht auf. Weiter bevorzugt ist die Steuereinheit zur Durchführung eines STED-MINFLUX-Verfahrens ausgebildet.

Aus den voranstehenden Erläuterungen von bevorzugten Ausführungsformen des erfindungsgemäßen Verfahrens ergeben sich entsprechende bevorzugte Ausführungsformen des erfindungsgemäßen Mikroskops.

### FIGURENBESCHREIBUNG UND ERLÄUTERUNG DER ERFINDUNG ANHAND DER FIGUREN

Im Folgenden wird die Erfindung anhand in den Figuren dargestellter bevorzugter Ausführungsbeispiele weiter erläutert und beschrieben.
- **Fig. 1**: zeigt schematisch ein erfindungsgemäßes Mikroskop
- **Fig. 2**: illustriert schematisch den Ablauf einer Abbildung einer Probe ausgehend von einem großen Bildfeld bis zur Abbildung eines Ausschnitts mit molekularer Auflösung
- **Fig. 3**: illustriert Ausführungsformen eines fünften, vierten und dritten Verfahrens
- **Fig. 4**: illustriert Ausführungsformen eines zweiten und eines ersten Verfahrens

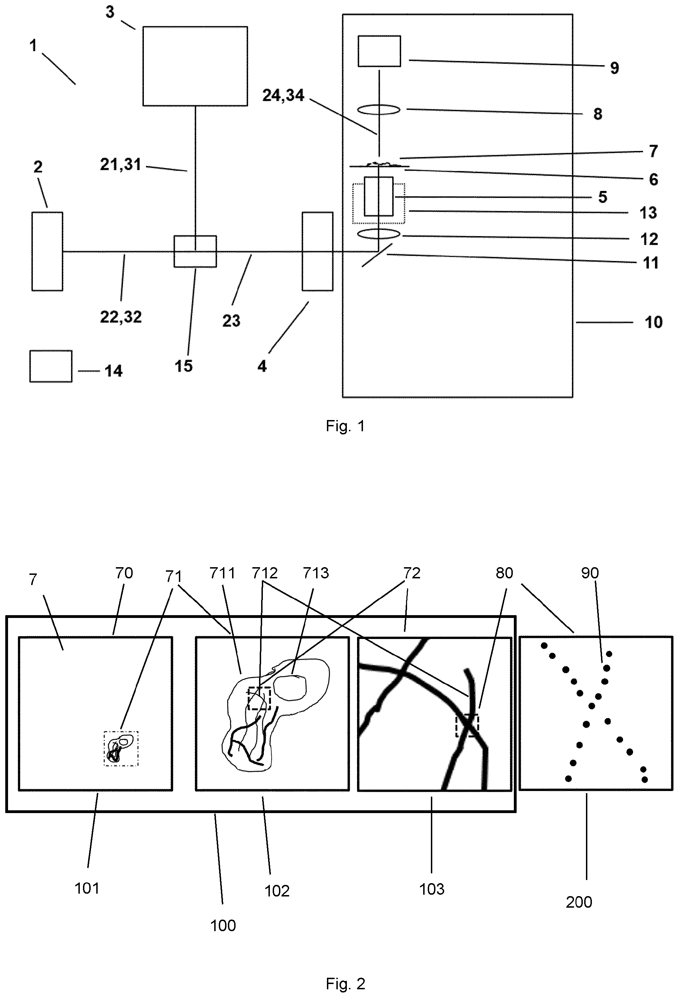

Das in Fig. 1 dargestellte erfindungsgemäße Mikroskop 1 weist eine konfokal angeordnete Detektionseinheit 2 auf, die einen einstellbaren Wellenlängenbereich aufweist und eingerichtet ist, bei jeder gewählten Einstellung Licht eines zusammenhängenden Wellenlängenbereichs zu erfassen. Es weist weiter eine Lichtquelleneinheit 3 auf. Diese Lichtquelleneinheit 3 umfasst einen Anregungslaser und eine Einheit zur Modulation der Wellenfront des Anregungslichts 31. Das Anregungslicht 31 wird entlang eines Beleuchtungslichtpfads 21 auf ein dichroitisches Element 15 geleitet. Mittels des dichroitischen Elements wird das Anregungslicht 31 in einen Abschnitt eines Lichtpfads eingekoppelt, der einen gemeinsamen Lichtpfad 23 für das Anregungslicht 31 und für Detektionslicht 32 bildet. In dem gemeinsamen Lichtpfad 23 befindet sich eine Ablenkeinheit 4, die hier ausgebildet ist, sowohl bei einer konfokalmikroskopischen Bildaufnahme das Anregungslicht 31 über ein größeres Bildfeld rasternd zu bewegen als auch kleine Abtastbewegungen für die Durchführung eines MINFLUX-Verfahrens auszuführen. Über einen Umlenkspiegel 11, eine Tubuslinse 12 und ein Objektiv 5, welches in einer Objektivwechselvorrichtung 13 gehaltert ist, wird das Anregungslicht 31 in eine Probe 7, die sich auf einem Probenträger 6 befindet, fokussiert. Wenn das Anregungslicht 31 zur Anregung von Fluoreszenz in der Probe 7 geeignet ist, wird in der Probe 7 angeregte Fluoreszenz als Detektionslicht 32 auf demselben gemeinsamen Lichtpfad 23 in umgekehrter Richtung zum dichroitischen Element 15 geleitet. Das Detektionslicht 32 tritt durch das dichroitische Element 15 hindurch, während gegebenenfalls gestreutes Anregungslicht 31 am Durchtritt gehindert ist und in Richtung auf die Lichtquelleneinheit 3 abgelenkt wird. Das Detektionslicht 32 wird entlang des Detektionslichtpfads 22 auf die konfokal angeordnete Detektionseinheit 2 geleitet und von dieser erfasst. Das Mikroskop weist weiter eine Steuereinheit 14 auf, die eingerichtet ist zur Durchführung eines MINFLUX-Verfahrens und zur Durchführung eines Verfahrens gemäß Anspruch 1. Gleichzeitig ist sie hier eingerichtet zur Durchführung einer konfokalen Bildaufnahme. Sie ist außerdem mit den automatisch ansteuerbaren Komponenten des Mikroskops 1 wie der Ablenkeinheit sowie mit der Detektionseinheit 2 und mit einem weiteren Detektor 9 verbunden. Verbunden bedeutet hier, dass Signale zwischen der Steuereinheit 14 und den verbundenen Komponenten und den Detektoren in mindestens einer Richtung gesendet werden können, zum Beispiel über Funk oder über eine Kabelverbindung. Das Mikroskop 1 weist weiter ein Stativ 10 auf, welches insbesondere die Tubuslinse 12, das Objektiv 5 und den Probenträger 6 trägt oder enthält. An dem Stativ 10 ist der weitere Detektor 9 lösbar befestigt. Dieser Detektor 9 erfasst durch die Probe 7 transmittiertes Licht 34, welches entlang eines Durchlichtdetektionslichtpfades 24 durch einen Kondensor 8 auf ihn geleitet wird.

Fig. 2 illustriert schematisch den Ablauf eines erfindungsmäßen Verfahrens. Das erste Aufnehmen 100 umfasst in dem gezeigten Beispiel drei Teilschritte 101,102,13. Eine Probe 7, die hier einen Gesamtbereich 70 vollständig ausfüllt, wird mit einem Teilschritt 101 des ersten Aufnehmens abgebildet, um zu untersuchende Objekte zu finden und gegebenenfalls zu identifizieren. In dem Teilschritt 101 kann ein scannendes Kontrastverfahren zur Anwendung kommen. Für die Beleuchtung wird ein Objektiv 5 mit niedriger, beispielsweise 10-facher Vergrößerung gewählt, wodurch sichergestellt wird, dass die Abtasteinheit 4 den Gesamtbereich 70 vollständig abtasten kann. Die Detektion kann mit dem in Figur 1 dargestellten Detektor 9 erfolgen. Unter Nutzung nicht dargestellter optischer Komponenten im optischen Pfad 21, 23 in Beleuchtungsrichtung vor der Abtasteinheit 4, das heißt, derart, dass das Beleuchtungslicht erst die Komponenten und dann die Abtasteinheit 4 erreicht, und im Durchlichtdetektionslichtpfad 24 kann als Kontrastverfahren der differentielle Interferenzkontrast angewendet werden. Vor einem Wechsel auf ein fluoreszenzmikroskopisches Abbildungsverfahren werden diese nicht dargestellten Komponenten zumindest aus dem Detektionslichtpfad 22 inklusive des gemeinsamen Lichtpfads 23 entfernt, beispielsweise motorisch herausgeschwenkt. In dem Gesamtbereich 70 wird in einem Teilbereich 71 ein Objekt gefunden. Dieser Teilbereich 71 wird nun in einem zweiten Teilschritt 102 unter Verwendung eines Objektivs 5 mit höherer, beispielsweise 100-facher Vergrößerung abgetastet und abgebildet. Hierfür kann dasselbe oder ein anderes Abbildungsverfahren zur Anwendung kommen als im ersten Schritt. Bevorzugt wird ein Verfahren gewählt, welches die Probe 7 möglichst wenig belastet. In dem Teilbereich 71 befindet sich eine Zelle mit einer Zellmembran 711, Organellen 712 (dünn gezeichnete Linien) und weiteren Organellen (dicker gezeichnet, der besseren Übersicht wegen ohne Bezugsziffer) und einem Zellkern 713. Der Beobachter wählt nun einen Teilbereich 72 innerhalb der Zelle aus, der Organellen 712 enthält. Dieser Teilbereich wird nun mit einem hochauflösenden, abtastenden Verfahren, beispielsweise mittels konfokalmikroskopischer Abbildung oder mittels STED-Abbildung, abgebildet. In dem erhaltenen Bild wird ein interessierender Probenbereich 80 bestimmt. Dieser interessierende Probenbereich 80 ist hier so gewählt, dass innerhalb sowohl die Messungen zum Bestimmen von Wellenlängenbereichen für eine optimierte ratiometrische Trennung der mehreren Farbstoffe durchgeführt werden als auch das Lokalisieren 200 der Fluorophore 90 selbst.

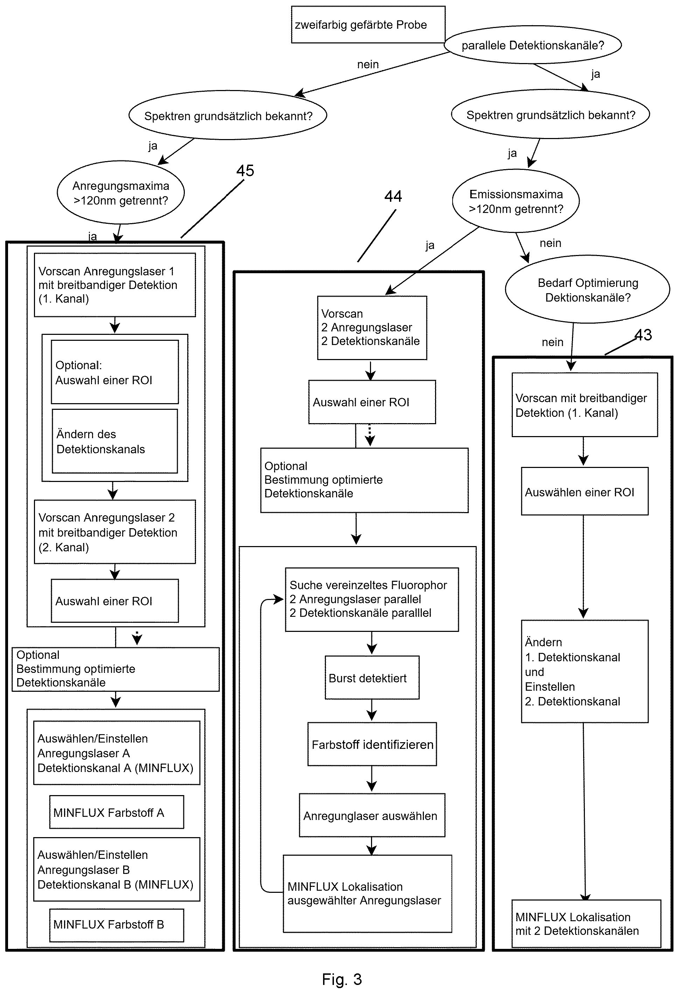

In Figur 3 sind Ablaufdiagramme eines fünften Verfahrens 45, eines vierten Verfahrens 44 und eines dritten Verfahrens 43 dargestellt. Zusätzlich ist oberhalb ein Entscheidungsbaum dargestellt, aus dem zu ersehen ist, unter welchen Bedingungen das jeweilige Verfahren bevorzugt anzuwenden ist. So wird das linke Verfahren insbesondere dann angewendet, wenn das Mikroskop nicht über parallele, geeignete Detektionskanäle verfügt, sondern wenn es nur genau eine geeignete Detektionseinheit aufweist. Sind die spektralen Eigenschaften der in der Probe 7 enthaltenen zwei Farbstoffe grundsätzlich bekannt und liegen die Absorptionsmaxima für eine Trennung der Farbstoffe durch die Wahl unterschiedlicher Anregungswellenlängen weit genug auseinander, zum Beispiel mehr als 120 nm, dann kann vorteilhaft das fünfte Verfahren 45 angewendet werden. Im Ablaufdiagramm sind nun in zeitlicher Abfolge durchzuführende Schritte durch einen gerichteten Pfeil gekennzeichnet. Sind innerhalb eines Kastens Schritte zwar untereinander dargestellt, aber nicht verbunden, so ist die Reihenfolge nicht festgelegt. Eine Ausnahme hiervon bilden die Angaben zum fünften Verfahren 45 hinsichtlich des Auswählens und Einstellens der Anregungslaser und dem Durchführen der MINFLUX-Lokalisation. Hier ist es selbstverständlich so, dass mit Einstellungen für einen Farbstoff A MINFLUX-Lokalisationen des Farbstoffs A durchgeführt werden, entsprechendes gilt für Farbstoff B. Das Ablaufdiagramm ist vor dem Hintergrund dieses Hinweises selbsterklärend.

Verfügt dagegen das Mikroskop 1 über parallele geeignete Detektionskanäle und sind die spektralen Eigenschaften der in der Probe 7 enthaltenen zwei Farbstoffe grundsätzlich bekannt und liegen die Absorptionsmaxima für eine Trennung der Farbstoffe durch die Wahl unterschiedlicher Anregungswellenlängen weit genug auseinander, zum Beispiel mehr als 120 nm, dann kann vorteilhaft das vierte Verfahren 44 angewendet werden. Das Ablaufdiagramm ist selbsterklärend.

Für den Fall, dass Wellenlängenbereiche für eine optimierte ratiometrische Trennung der mehreren Farbstoffe schon vorab sehr gut bekannt sind, beispielsweise, weil sie vorher an einer Vergleichsprobe nach einem erfindungsgemäßen Verfahren bestimmt wurde, ist die eine zu lösende Aufgabe, eine insgesamt möglichst photoneneffiziente Abbildung durchzuführen, die im Bild eine hochgenaue Einbettung des mittels eines MINFLUX-Verfahrens aufgenommenen Bereichs in den im Rahmen des ersten Aufnehmens 100 erhalten Bildbereich. Insbesondere für den Fall, dass die Absorptionsspektren der verwendeten mehreren Farbstoffe zu ähnlich für eine Trennung durch die Verwendung verschiedener Anregungswellenlängen sind, wird diese Aufgabe durch ein drittes Verfahren gelöst. Es wird ein Vorscan mit breitbandiger Detektion in einem ersten Detektionskanal durchgeführt, weiter wird ein interessierender Probenbereich 80 bestimmt. Typischerweise wird der Nutzer erst den interessierenden Probenbereich 80 bestimmen, bevor er die Einstellung der in der Folge zu verwendenden zwei Detektionskanäle veranlasst. Deswegen sind hier die entsprechenden Schritte durch einen gerichteten Pfeil verbunden. Tatsächlich kann die Reihenfolge aber auch getauscht werden. Nachdem der erste Detektionskanal geändert wurde und der zweite Detektionskanal eingestellt ist, wird eine MINFLUX-Lokalisation unter Verwendung zweier Detektionskanäle durchgeführt. Die Fluorophore 90 werden ratiometrisch getrennt. Es ist grundsätzlich auch denkbar, die Detektion beim Vorscan mit einer Detektionseinheit durchzuführen, die nicht für die MINFLUX-Lokalisation genutzt wird. Dies erfordert aber nicht nur eine weitere Detektionseinheit, sondern erhöht auch den Justageaufwand. Erfolgt die Detektion mit einer kaskadierten Detektionseinrichtung, insbesondere einer solchen, wie sie aus dem Patent DE 10 2018 126 232 B3 bekannt ist, wird man beim Vorscan bevorzugt die Detektion mit der ersten Detektionseinheit durchführen. Weitere Detektoren werden nur von Licht mit Wellenlängen erreicht, welches nicht auf diese erste Detektionseinheit geleitet wird. Demzufolge muss für eine Detektion in zwei Kanälen, die häufig zumindest mit dem ersten breiten Detektionskanal überlappen, der erste Detektionskanal geändert werden.

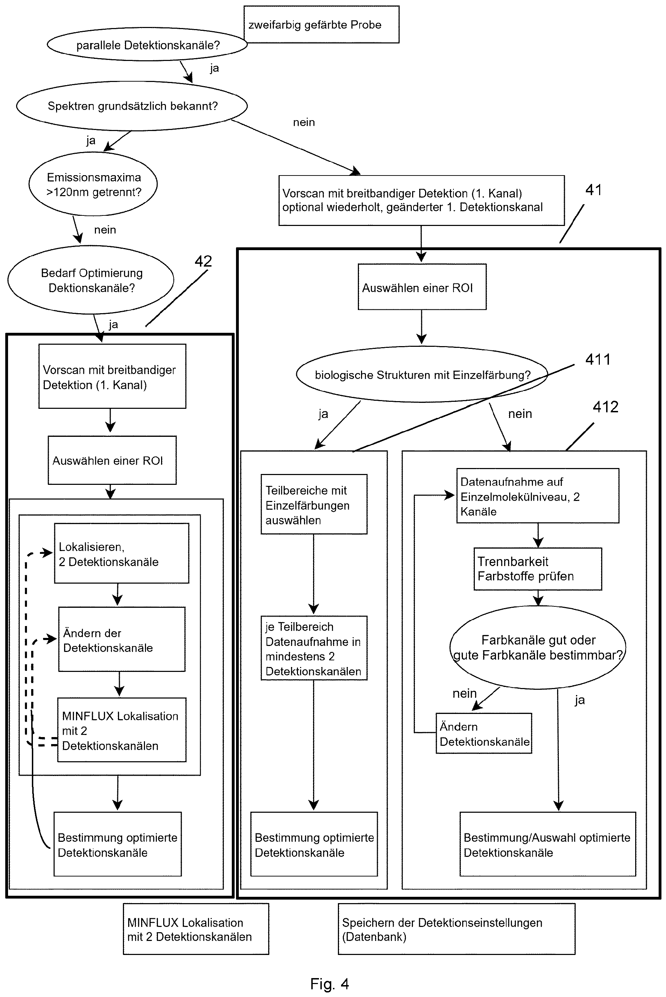

In Figur 4 sind Ablaufdiagramme von Ausführungsformen eines zweiten Verfahrens 42 und eines ersten Verfahrens 41 dargestellt. Auch diese Ablaufdiagramme sind vor dem Hintergrund der entsprechenden Ausführungen zu dem betreffenden Verfahren 41 in der Beschreibung der Erfindung weitestgehend selbsterklärend. Es sei hier aber erläutert, was durch die beiden gestrichelt dargestellten Pfeile und der mit diesen verbundenen Linie innerhalb des das zweite Verfahren 42 symbolisierenden Rahmens angedeutet wird. Zwischen verschiedenen Schritten des Lokalisierens in mehreren Detektionskanälen werden die Detektionskanäle geändert. Dies kann einerseits geschehen, um durch Vergleich der Güte der ratiometrischen Trennung optimierte Einstellungen zu finden. Es kann aber auch geschehen, wenn aus den Daten erkannt wird, dass die Einstellungen für eine optimierte Trennung geändert werden müssen. In diesem Falle erfolgt also zunächst eine Bestimmung optimierter oder zumindest verbesserter Detektionskanäle bevor die Einstellungen geändert werden. Weiter sei darauf hingewiesen, dass das erste Lokalisieren, welches gleichzeitig genutzt wird, um verbesserte oder optimierte Detektionskanäle zu finden, auch ein Verfahren wie PALM sein kann. Grundsätzlich gilt dies auch für die folgenden Lokalisationen. Allerdings kann mit solchen Verfahren allenfalls unter sehr günstigen Bedingungen eine molekulare Auflösung erzielt werden. Deswegen ist erfindungsgemäß vorgesehen, ein MINFLUX- oder ein STED-MINFLUX-Verfahren anzuwenden.

### BEZUGSZEICHENLISTE

- 1: Mikroskop
- 2: Detektionseinrichtung bzw. Detektionseinheit
- 3: Lichtquelleneinheit
- 4: Abtasteinheit
- 5: Objektiv
- 6: Probenträger
- 7: Probe
- 8: Kondensor
- 9: Detektor
- 10: Stativ
- 11: Umlenkspiegel
- 12: Tubuslinse
- 13: Objektivwechselvorrichtung
- 14: Steuereinheit
- 15: Dichroitisches Element
- 21: Beleuchtungslichtpfad
- 22: Detektionslichtpfad
- 23: Gemeinsamer Lichtpfad
- 24: Durchlichtdetektionslichtpfad
- 31: Anregungslicht
- 32: Detektionslicht
- 34: Transmittiertes Licht
- 41: erstes Verfahren
- 42: zweites Verfahren
- 43: drittes Verfahren
- 44: viertes Verfahren
- 45: fünftes Verfahren
- 70: Gesamtbereich
- 71: Teilbereich
- 72: Teilbereich
- 80: Interessierender Probenbereich
- 90: Fluorophore
- 100: erstes Aufnehmen
- 101: Teilschritt
- 102: Teilschritt
- 103: Teilschritt
- 200: Lokalisieren
- 411: erste Weiterbildung
- 412: zweite Weiterbildung
- 711: Zellmembran
- 712: Organell
- 713: Zellkern

## Patentansprüche

1. Verfahren zur lokalisationsmikroskopischen Untersuchung (200) einer mit mehreren Farbstoffen gefärbten Probe (7) umfassend:
- ein erstes Aufnehmen (100) von Bilddaten der Probe (7) oder eines Teilbereichs (101,102,103) der Probe,
- ein Bestimmen und Auswählen eines interessierenden Probenbereichs (80) anhand der Bilddaten,
- ein Anregen von Fluorophoren (90) in einem ersten Teilbereich innerhalb des ausgewählten interessierenden Probenbereichs (80) mit Anregungslicht (31) einer ersten Anregungswellenlänge und ein erstes Detektieren der von den angeregten Fluorophoren (90) in einem ersten Wellenlängenbereich emittierten Fluoreszenzphotonen mit einer ersten Detektionseinheit (2),
- ein zweites Detektieren der von mit Anregungslicht (31) der ersten Anregungswellenlänge angeregten Fluorophore (90) in einem zweiten Wellenlängenbereich, der sich von dem ersten Wellenlängenbereich unterscheidet, emittierten Fluoreszenzphotonen mit einer oder der Detektionseinheit (2),
wobei in dem interessierenden Probenbereich (80) ein Lokalisieren (200) oder ein Verfolgen vereinzelter Fluorophore (90) nach einem MINFLUX-Verfahren oder einem STED-MINFLUX-Verfahren durchgeführt wird,
**dadurch gekennzeichnet, dass** die erste Detektionseinheit (2) derart ausgebildet ist, dass der Wellenlängenbereich, in dem sie Fluoreszenzphotonen detektiert, einstellbar ist und dass das Verfahren weiter umfasst:
- ein Bestimmen von Wellenlängenbereichen für eine optimierte ratiometrische Trennung der mehreren Farbstoffe bei einer lokalisationsmikroskopischen Bildaufnahme der Probe (7) in mehreren spektralen Detektionskanälen, wobei das Detektieren der Fluoreszenzphotonen jeweils in den für eine optimierte ratiometrische Trennung der mehreren Farbstoffe bestimmten Wellenlängenbereichen erfolgt, wobei bei der ratiometrischen Trennung durch Bestimmen eines Verhältnisses der in den Wellenlängenbereichen detektierten Anzahlen von Fluoreszenzphotonen ein Fluorophor einem der mehreren Farbstoffe zugeordnet wird.

2. Verfahren nach Anspruch 1, **dadurch gekennzeichnet, dass** der erste Teilbereich innerhalb des interessierenden Probenbereichs (80) anhand der Bilddaten so ausgewählt wird, dass in ihm ausschließlich oder im Wesentlichen nur Fluorophore (90) eines ersten Farbstoffs enthalten sind und dass in dem ersten Teilbereich eine Mehrzahl von Fluorophoren (90) mit Anregungslicht (31) der ersten Anregungswellenlänge angeregt wird und dass aus dem ersten und dem zweiten Detektieren ein erster und ein zweiter die spektrale Emission des ersten Farbstoffs charakterisierender Wert erhalten werden.

3. Verfahren nach Anspruch 2, **dadurch gekennzeichnet, dass** ein zweiter Teilbereich und optional weitere Teilbereiche innerhalb des interessierenden Probenbereichs (80) anhand der Bilddaten so ausgewählt wird oder werden, das in ihm oder jeweils in ihnen ausschließlich oder im Wesentlichen nur Fluorophore (90) eines zweiten oder eines weiteren Farbstoffs enthalten sind und dass in dem zweiten oder jeweils in einem weiteren Teilbereich eine Mehrzahl von Fluorophoren (90) mit Anregungslicht (31) der ersten Anregungswellenlänge angeregt wird und dass ein Detektieren der von den jeweiligen angeregten Fluorophoren (90) emittierten Fluoreszenzphotonen in dem ersten und dem zweiten Wellenlängenbereich erfolgt und dass jeweils ein erster und ein zweiter die spektrale Emission des zweiten oder des jeweiligen weiteren Farbstoffs charakterisierender Wert erhalten werden.

4. Verfahren nach Anspruch 2 oder 3, **dadurch gekennzeichnet, dass** ein weiteres Detektieren der von jeweils mit Anregungslicht (31) der ersten Anregungswellenlänge angeregten Fluorophore (90) des ersten, des zweiten oder eines Farbstoffs der weiteren Farbstoffe emittierten Fluoreszenzphotonen in einem oder mehreren weiteren Wellenlängenbereichen, die sich voneinander und von dem ersten und dem zweiten Wellenlängenbereich unterscheiden, erfolgt, sodass aus der Messung an der mit mehreren Farbstoffen gefärbten Probe (7) eine Mehrzahl von die spektrale Emission des ersten, des zweiten oder eines Farbstoffs der weiteren Farbstoffe charakterisierenden Werten erhalten wird.

5. Verfahren nach einem der Ansprüche 2 bis 4, **dadurch gekennzeichnet, dass** sich die wechselweise unterschiedlichen Wellenlängenbereiche nicht überlappen.

6. Verfahren nach einem der Ansprüche 3 bis 5, **dadurch gekennzeichnet, dass** die Wellenlängenbereiche für eine optimierte ratiometrische Trennung aus den jeweils ersten und zweiten die spektrale Emission des ersten oder des zweiten oder optional eines weiteren Farbstoffs charakterisierenden Werten oder aus der Mehrzahl solcher Werte erhalten werden.

7. Verfahren nach einem der Ansprüche 2 bis 6, **dadurch gekennzeichnet, dass** die erste Detektionseinheit (2) für die Detektion in unterschiedlichen Wellenlängenbereichen verwendet wird.

8. Verfahren nach Anspruch 1, **dadurch gekennzeichnet, dass** der erste Teilbereich innerhalb des interessierenden Probenbereichs (80) anhand der Bilddaten so ausgewählt wird, dass in ihm Fluorophore (90) mehrerer Farbstoffe enthalten sind, und dass in dem ersten Teilbereich wiederholt vereinzelte Fluorophore (90) angeregt werden, wobei insgesamt Fluorophore (90) aller der mehreren Farbstoffe angeregt werden.

9. Verfahren nach Anspruch 8, **dadurch gekennzeichnet, dass** ein weiteres Anregen von Fluorophoren (90) mit Anregungslicht (31) der ersten Anregungswellenlänge und ein weiteres Detektieren in zwei weiteren Wellenlängenbereichen erfolgt, wobei mindestens einer der zwei weiteren Wellenlängenbereiche weder der erste noch der zweite Wellenlängenbereich ist.

10. Verfahren nach Anspruch 8 oder 9, **dadurch gekennzeichnet, dass** der erste Wellenlängenbereich und der zweite Wellenlängenbereich bei einer ersten Grenzwellenlänge einander angrenzend sind.

11. Verfahren nach Anspruch 9 oder 10, **dadurch gekennzeichnet, dass** die zwei weiteren Wellenlängenbereiche bei einer oder der Grenzwellenlänge oder einer weiteren Grenzwellenlänge einander angrenzend sind, insbesondere wobei mehrfach ein weiteres Anregen und Detektieren erfolgt, wobei jeweils eine andere weitere Grenzwellenlänge gewählt wird.

12. Verfahren nach Anspruch 8 oder 9, **dadurch gekennzeichnet, dass** der erste Wellenlängenbereich und/oder einer der weiteren Wellenlängenbereiche Wellenlängen umfasst, die kleiner sind als die erste Anregungswellenlänge, bevorzugt ausschließlich Wellenlängen umfasst, die kleiner sind als die erste Anregungswellenlänge.

13. Verfahren nach einem der Ansprüche 8 bis 12, **dadurch gekennzeichnet, dass** eine Zuordnung von jeweils während der Detektion in zwei Wellenlängenbereichen, in dem ersten und dem zweiten Wellenlängenbereich und/oder in einem und einem anderen Wellenlängenbereich der zwei weiteren Wellenlängenbereiche, detektierten Fluoreszenzphotonen zu Bursts der vereinzelten Fluorophore (90) erfolgt und dass zu den Bursts jeweils die Anzahlen der im einen und dem anderen Wellenlängenbereich detektierten Fluoreszenzphotonen bestimmt werden.

14. Verfahren nach Anspruch 13, **dadurch gekennzeichnet, dass** die Wellenlängenbereiche für eine optimierte ratiometrische Trennung aus den zu den Bursts bestimmten Anzahlen der im einen und dem anderen Wellenlängenbereich detektierten Fluoreszenzphotonen bestimmt werden.

15. Mikroskop (1), das eingerichtet ist, ein Verfahren nach einem der Ansprüche 1 bis 14 durchzuführen
- mit einem Laser, der eingerichtet ist, Fluoreszenz anzuregen,
- mit einer Abtasteinheit (4), die eingerichtet ist, eine Probe (7) rasternd mit fokussiertem Anregungslicht (31) abzutasten,
- mit einer Detektionseinheit (2), die eingerichtet ist, Fluoreszenzphotonen, die aus der Probe (7) über einen optischen Pfad (22) in eine zum Fokus des Anregungslichts (31) konjugierte Ebene geleitet werden, innerhalb einstellbarer Wellenlängenbereiche nicht spektral aufgelöst zu detektieren, und
- einer Einrichtung, die eingerichtet ist, eine Wellenfront von Anregungslicht (31) derart zu beeinflussen, dass das Anregungslicht (31) am Ort der Probe (7) in einem Fokusbereich eine Intensitätsverteilung mit einem zentralen Minimum ausbildet und
- mit einer Steuereinheit (14), die eingerichtet ist, ein MINFLUX-Verfahren durchzuführen, wobei die Steuereinheit (14) weiterhin eingerichtet ist, ein Verfahren nach einem der Ansprüche 1 bis 14 durchzuführen.

## Claims

1. Method for localization microscopic examination (200) of a sample (7) stained with multiple dyes comprising:
- a first acquisition (100) of image data of the sample (7) or a partial area (101,102,103) of the sample,
- a determining and selecting a sample region of interest (80) based on the image data,
- an exciting of fluorophores (90) in a first subregion within the selected sample region of interest (80) with excitation light (31) of a first excitation wavelength, and a first detecting of the fluorescence photons emitted by the excited fluorophores (90) in a first wavelength region with a first detection unit (2),
wherein a localizing (200) or a tracking of isolated fluorophores (90) is performed in the sample region of interest (80) according to a MINFLUX method or a STED-MINFLUX method,
- a second detecting of the fluorescence photons emitted by fluorophores (90) excited with excitation light (31) of the first excitation wavelength in a second wavelength range different from the first wavelength range with a detection unit (2) or the detection unit (2),
**characterized in that** the first detection unit (2) is configured such that the wavelength range in which it detects fluorescence photons is adjustable, and **in that** the method further comprises:
- a determining of wavelength ranges for an optimized ratiometric separation of the multiple dyes in a localization microscopic image acquisition of the sample (7) in multiple spectral detection channels, wherein the detecting of the fluorescence photons is performed respectively in the wavelength ranges determined for optimized ratiometric separation of the plurality of dyes, wherein, in the ratiometric separation, a fluorophore is assigned to one of the plurality of dyes by determining a ratio of the numbers of fluorescence photons detected in the wavelength ranges.

2. Method according to claim 1, **characterized in that** the first subregion within the sample region of interest (80) is selected based on the image data such that only or substantially only fluorophores (90) of a first dye are contained therein, and **in that** a plurality of fluorophores (90) in the first subregion are excited with excitation light (31) of the first excitation wavelength, and **in that** a first and a second value characterizing the spectral emission of the first dye are obtained from the first and second detections.

3. Method according to claim 2, **characterized in that** a second subregion and optionally further subregions within the sample region of interest (80) is or are selected based on the image data in such a way that in it or in each of them exclusively or substantially only fluorophores (90) of a second or a further dye are contained and that in the second or respectively in a further subregion a plurality of fluorophores (90) is excited with excitation light (31) of the first excitation wavelength and **in that** detection of the fluorescence photons emitted by the respective excited fluorophores (90) takes place in the first and the second wavelength range, and **in that** in each case a first and a second value characterizing the spectral emission of the second or of the respective further dye are obtained.

4. Method according to claim 2 or 3, **characterized in that** a further detecting of the fluorescence photons emitted by fluorophores (90) of the first, of the second or of one dye of the further dyes respectively excited with excitation light (31) of the first excitation wavelength takes place in one or more further wavelength ranges, different from each other and from the first and second wavelength ranges, so that a plurality of values characterizing the spectral emission of the first, the second or one of the further dyes is obtained from the measurement on the sample (7) stained with multiple dyes.

5. Method according to one of the claims 2 to 4, **characterized in that** the alternately different wavelength ranges do not overlap.

6. The method according to one of the claims 3 to 5, **characterized in that** the wavelength ranges for an optimized ratiometric separation are obtained from the respective first and second values characterizing the spectral emission of the first or the second or optionally of a further dye or from the plurality of such values.

7. Method according to one of the claims 2 to 6, **characterized in that** the first detection unit (2) is used for detection in different wavelength ranges.

8. Method according to claim 1, **characterized in that** the first subregion within the sample region of interest (80) is selected based on the image data to include fluorophores (90) of multiple dyes, and **in that** isolated fluorophores (90) are repeatedly excited in the first subregion, wherein in total fluorophores (90) of all of the multiple dyes are excited.

9. Method according to claim 8, **characterized in that** a further exciting of fluorophores (90) with excitation light (31) of the first excitation wavelength and a further detecting in two further wavelength ranges takes place, wherein at least one of the two further wavelength ranges is neither the first nor the second wavelength range.

10. Method according to claim 8 or 9, **characterized in that** the first wavelength range and the second wavelength range are adjacent to each other at a first threshold wavelength.

11. Method according to claim 9 or 10, **characterized in that** the two further wavelength ranges are adjacent to each other at one or the threshold wavelength or a further threshold wavelength, in particular wherein a further exciting and detecting is carried out several times, with a different further threshold wavelength being selected in each case.

12. Method according to claim 8 or 9, **characterized in that** the first wavelength range and/or one of the further wavelength ranges comprises wavelengths that are smaller than the first excitation wavelength, preferably exclusively comprises wavelengths that are smaller than the first excitation wavelength.

13. Method according to one of the claims 8 to 12, **characterized in that** an assignment of fluorescence photons detected in each case during the detection in two wavelength ranges, in the first and the second wavelength range and/or in one and another wavelength range of the two further wavelength ranges, to bursts of the isolated fluorophores (90) is carried out, and **in that** the numbers of the fluorescence photons detected in the one and the other wavelength range are determined for the bursts in each case.

14. Method according to claim 13, **characterized in that** the wavelength ranges for optimized ratiometric separation are determined from the numbers of fluorescence photons detected in the one and the other wavelength range determined for the bursts.

15. Microscope (1) set up to perform a method according to one of claims 1 to 14 comprising:
- a laser set up to excite fluorescence,
- a scanning unit (4) set up to scan a sample (7) in a rasterized manner with focused excitation light (31),
- a detection unit (2), which is configured to detect fluorescence photons, which are guided from the sample (7) via an optical path (22) into a plane conjugate to the focus of the excitation light (31), within adjustable wavelength ranges in a non-spectrally resolved manner, and
- a device set up to influence a wavefront of excitation light (31) in such a way that the excitation light (31) forms an intensity distribution with a central minimum at the location of the sample (7) in a focal area, and
- a control unit (14) set up to perform a MINFLUX method, wherein the control unit (14) is further configured to perform a method according to one of claims 1 to 14.

## Revendications

1. Procédé d'examen par microscopie de localisation (200) d'un échantillon (7) coloré avec plusieurs colorants, comprenant :
- une première enregistrement (100) de données d'image de l'échantillon (7) ou d'une zone partielle (101, 102, 103) de l'échantillon,
- une détermination et une sélection d'une zone d'échantillon d'intérêt (80) sur la base des données d'image,
- une excitation de fluorophores (90) dans une première zone partielle à l'intérieur de la zone d'échantillon d'intérêt sélectionnée (80) avec une lumière d'excitation (31) d'une première longueur d'onde d'excitation et une première détection des photons de fluorescence émis par les fluorophores excités (90) dans une première plage de longueurs d'onde avec une première unité de détection (2), une localisation (200) ou un suivi de fluorophores isolés (90) selon un procédé MINFLUX ou un procédé STED-MINFLUX étant effectué dans la zone d'échantillon (80) d'intérêt,
- une seconde détection de photons de fluorescence émis par des fluorophores (90) excités par une lumière d'excitation (31) de la première longueur d'onde d'excitation, dans une seconde plage de longueurs d'onde différente de la première plage de longueurs d'onde, avec une ou plusieurs unités de détection (2),
**caractérisé en ce que** la première unité de détection (2) est conçue de telle sorte que la plage de longueurs d'onde dans laquelle elle détecte des photons de fluorescence est réglable et **en ce que** le procédé comprend en outre :
- une détermination de plages de longueurs d'onde pour une séparation ratiométrique optimisée des plusieurs colorants lors d'une enregistrement de données d'image de l'échantillon (7) par microscopie de localisation dans plusieurs canaux de détection spectraux, la détection des photons de fluorescence s'effectuant respectivement dans les plages de longueurs d'onde déterminées pour une séparation ratiométrique optimisée des plusieurs colorants, dans lequel pendant la séparation ratiométrique un fluorophore est attribué à l'un de la pluralité de colorants en déterminant un rapport du nombre de photons de fluorescence détectés dans les plages de longueurs d'onde.

2. Procédé selon la revendication 1, **caractérisé en ce que** la première zone partielle à l'intérieur de la zone d'échantillon d'intérêt (80) est sélectionnée sur la base des données d'image de telle sorte qu'elle contient exclusivement ou essentiellement uniquement des fluorophores (90) d'un premier colorant et **en ce que** dans la première zone partielle une pluralité de fluorophores (90) sont excités avec une lumière d'excitation (31) de la première longueur d'onde d'excitation et **en ce que** à partir de la première et de la deuxième détection une première et une deuxième valeur caractérisant l'émission spectrale du premier colorant sont obtenues.

3. Procédé selon la revendication 2, **caractérisé en ce qu'**une deuxième zone partielle et facultatif d'autres zones partielles à l'intérieur de la zone d'échantillon d'intérêt (80) est ou sont sélectionnées sur la base des données d'image de telle manière, que dans celle-ci ou respectivement dans celles-ci sont contenus exclusivement ou essentiellement seulement des fluorophores (90) d'un deuxième colorant ou d'un autre colorant et que dans la deuxième zone partielle ou respectivement dans une autre zone partielle, une pluralité de fluorophores (90) est excitée avec une lumière d'excitation (31) de la première longueur d'onde d'excitation. et **en ce qu'**une détection des photons de fluorescence émis par les fluorophores (90) excités respectifs a lieu dans la première et la deuxième plage de longueurs d'onde et **en ce qu'**une première et une deuxième valeur caractérisant l'émission spectrale du deuxième colorant ou de l'autre colorant respectif sont respectivement obtenues.

4. Procédé selon la revendication 2 ou 3, **caractérisé en ce qu'**une autre détection des photons de fluorescence émis par des fluorophores (90) du premier, du deuxième ou d'un colorant des autres colorants, excités respectivement par une lumière d'excitation (31) de la première longueur d'onde d'excitation, est effectuée dans une ou plusieurs autres plages de longueurs d'onde, qui diffèrent l'une de l'autre et de la première et de la deuxième plage de longueurs d'onde, de sorte qu'à partir de la mesure sur l'échantillon (7) coloré avec plusieurs colorants, on obtient une pluralité de valeurs caractérisant l'émission spectrale du premier, du deuxième ou d'un colorant parmi les autres colorants.

5. Procédé selon l'une des revendications 2 à 4, **caractérisé en ce que** les plages de longueurs d'onde mutuellement différents ne se chevauchent pas.

6. Procédé selon l'une des revendications 3 à 5, **caractérisé en ce que** les plages de longueurs d'onde pour une séparation ratiométrique optimisée sont obtenues à partir des première et deuxième valeurs respectives caractérisant l'émission spectrale du premier ou du deuxième colorant ou facultatif d'un autre colorant, ou à partir de la pluralité de telles valeurs.

7. Procédé selon l'une des revendications 2 à 6, **caractérisé en ce que** la première unité de détection (2) est utilisée pour la détection dans différentes plages de longueurs d'onde.

8. Procédé selon la revendication 1, **caractérisé en ce que** la première zone partielle à l'intérieur de la zone d'échantillon (80) d'intérêt est sélectionnée sur la base des données d'image de telle sorte qu'elle contienne des fluorophores (90) de plusieurs colorants, et **en ce que** des fluorophores (90) isolés sont excités de manière répétée dans la première zone partielle, des fluorophores (90) de tous les colorants étant excités au total.

9. Procédé selon la revendication 8, **caractérisé en ce qu'**une excitation supplémentaire de fluorophores (90) est effectuée avec une lumière d'excitation (31) de la première longueur d'onde d'excitation et une détection supplémentaire est effectuée dans deux plages de longueurs d'onde supplémentaires, au moins une des deux plages de longueurs d'onde supplémentaires n'étant ni la première ni la deuxième plage de longueurs d'onde.

10. Procédé selon la revendication 8 ou 9, **caractérisé en ce que** la première plage de longueurs d'onde et la deuxième plage de longueurs d'onde sont adjacentes l'une à l'autre à une première longueur d'onde de coupure.

11. Procédé selon la revendication 9 ou 10, **caractérisé en ce que** les deux autres plages de longueurs d'onde sont adjacentes l'une à l'autre à une ou à la longueur d'onde de coupure ou à une autre longueur d'onde de coupure, en particulier dans lequel une autre excitation et une autre détection ont lieu plusieurs fois, une autre longueur d'onde de coupure différente étant choisie à chaque fois.

12. Procédé selon la revendication 8 ou 9, **caractérisé en ce que** la première plage de longueurs d'onde et/ou l'une des autres plages de longueurs d'onde comprend des longueurs d'onde qui sont plus petites que la première longueur d'onde d'excitation, de préférence comprend exclusivement des longueurs d'onde qui sont plus petites que la première longueur d'onde d'excitation.

13. Procédé selon l'une des revendications 8 à 12, **caractérisé en ce qu'**une attribution de photons de fluorescence détectés respectivement pendant la détection dans deux plages de longueurs d'onde, dans la première et la deuxième plage de longueurs d'onde et/ou dans l'une et l'autre plage de longueurs d'onde des deux autres plages de longueurs d'onde, à des salves des fluorophores (90) isolés est effectuée et **en ce que** les nombres de photons de fluorescence détectés dans l'une et l'autre plage de longueurs d'onde sont déterminés respectivement pour les salves.

14. Procédé selon la revendication 13, **caractérisé en ce que** les plages de longueurs d'onde pour une séparation ratiométrique optimisée sont déterminées sur la base des nombres de photons de fluorescence déterminés pour les salves, qui ont été détectés dans l'une et l'autre plage de longueurs d'onde.

15. Microscope (1) agencée pour mettre en oeuvre un procédé selon l'une des revendications 1 à 14
- avec un laser agencée pour exciter la fluorescence,
- avec une unité de balayage (4), qui est agencée pour balayer un échantillon (7) par balayage avec une lumière d'excitation focalisée (31),
- avec une unité de détection (2), qui est agencée pour détecter des photons de fluorescence qui sont guidés depuis l'échantillon (7) via un chemin optique (22) vers un plan qui est conjugué au point focal de la lumière d'excitation (31), à l'intérieur de plages de longueurs d'onde réglables sans une désagrégation spectrale, et
- un dispositive, qui est agencée pour influencer un front d'onde de la lumière d'excitation (31) de telle sorte que la lumière d'excitation (31) forme à l'endroit de l'échantillon (7) dans une zone focale une distribution d'intensité avec un minimum central et
- avec une unité de commande (14) qui est agencée pour exécuter un procédé MINFLUX, l'unité de commande (14) étant en outre agencée pour exécuter un procédé selon l'une des revendications 1 à 14.
